# EUROPEAN PATENT APPLICATION

(11) **EP 4 401 384 A1**
(43) Date of publication of application: **17.07.2024**
(21) Application number: 22894546.5
(22) Date of filing: 17.10.2022
(51) Int. Cl.: H04L 65/80, H04L 69/16

(54) **DATA TRANSMISSION METHOD AND COMMUNICATION APPARATUS**

(30) Priority: 22.11.2021 CN 202111386113
(71) Applicant: Huawei Technologies Co., Ltd., Shenzhen, Guangdong 518129 (CN)
(72) Inventor: XU, Rui, Shenzhen, Guangdong 518129 (CN); LIAO, Shuri, Shenzhen, Guangdong 518129 (CN); CHEN, Erkai, Shenzhen, Guangdong 518129 (CN); CAO, Youlong, Shenzhen, Guangdong 518129 (CN); DOU, Shengyue, Shenzhen, Guangdong 518129 (CN)
(74) Representative: Goddar, Heinz J.
(86) International application number: PCT/CN2022/125630
(87) International publication number: WO 2023/088009

(57) **Abstract**

A data transmission method and a communication apparatus are provided. The method includes: receiving a first identifier from a core network element, where the first identifier indicates that a first quality of service QoS data flow and a second QoS data flow belong to a first data unit; based on the first identifier and a first synchronization time parameter, mapping the first QoS data flow and the second QoS data flow respectively to a first access network resource and a second access network resource and sending the first QoS data flow and the second QoS data flow to a terminal device, where the first synchronization time parameter indicates a maximum interval between a moment at which sending of the first QoS data flow is completed and a moment at which sending of the second QoS data flow is completed. In solutions of this application, a moment at which sending of QoS data belonging to a same data unit to the terminal device or an access network device is completed is less than a preset value. This helps the terminal device or an application server perform decoding, and further improves user experience.

## Description

This application claims priority to Chinese Patent Application No. 202111386113.6, filed with the China National Intellectual Property Administration on November 22, 2021 and entitled "DATA TRANSMISSION METHOD AND COMMUNICATION APPARATUS", which is incorporated herein by reference in its entirety.

### TECHNICAL FIELD

This application relates to the communication field, and in particular, to a data transmission method and a communication apparatus.

### BACKGROUND

With the continuous development of a 5th generation (5th generation, 5G) communication system, a data transmission delay is continuously reduced and a transmission capacity is increasing. The 5G communication system is progressively used for some multimedia services that require high real-time performance, such as video transmission, cloud gaming (cloud gaming, CG), extended reality (extended reality, XR), and a tactile internet (tactile internet, TI). The XR includes virtual reality (virtual reality, VR) and augmented reality (augmented reality, AR). For multimedia services that require high real-time performance, how to ensure quality of service (quality of service, QoS) for a user has become a focus of current research.

Due to factors such as coding on a source end and transmission of a fixed network/core network, different data packets of a same frame of a multimedia service arrive at an access network device at different time. Consequently, jitter (jitter) occurs at a moment when some frames of the multimedia service arrive at a decoder side. Eventually, user experience is affected.

### SUMMARY

This application provides a data transmission method and a communication apparatus, to help a terminal device perform decoding and improve user experience.

According to a first aspect, a data transmission method is provided. The method may be performed by an access network device, or may be performed by a chip or a circuit disposed in the access network device, or may be performed by a logical module or software that can implement all or some functions of the access network device. This is not limited in this application.

The method includes: receiving a first identifier from a core network element, where the first identifier indicates that a first quality of service (quality of service, QoS) data flow and a second QoS data flow belong to a first data unit; and based on the first identifier and a first synchronization time parameter, mapping the first QoS data flow and the second QoS data flow respectively to a first access network resource and a second access network resource and sending the first QoS data flow and the second QoS data flow to a terminal device, where the first synchronization time parameter indicates a maximum interval between a moment at which sending of the first QoS data flow is completed and a moment at which sending of the second QoS data flow is completed.

According to the solution in embodiments of this application, the access network device may obtain the first identifier, perform access network resource mapping based on the first identifier and the first synchronization time parameter, and send the first QoS data flow and the second QoS data flow to the terminal device, so that an interval between the moment at which sending of the first QoS data flow in the first data unit to the terminal device is completed and the moment at which sending of the second QoS data flow in the first data unit to the terminal device is completed is less than time indicated by the first synchronization time parameter. This helps the terminal device perform decoding, and improves user experience.

Optionally, when transmitted data is data in a video service or data in an XR service, the first data unit may be a video frame, a video frame slice (slice), or a video frame tile (tile).

Optionally, the first data unit may alternatively be an application layer data unit (application data unit), a tactile multi-flow signal, a media unit (media unit), or a protocol data unit (protocol data unit).

Optionally, the first synchronization time parameter may also be understood as a QoS data flow delay budget that indicates a maximum delay with which sending of the first QoS data flow is completed and sending of the second QoS data flow is completed.

Optionally, the first access network resource and the second access network resource may be the same or may be different. In other words, the access network device may map the first QoS data flow and the second QoS data flow to a same access network resource (access network resource), or may map the first QoS data flow and the second QoS data flow to different access network resources.

With reference to the first aspect, in some implementations of the first aspect, the method further includes: receiving QoS configuration information from a session management function (session management function, SMF) network element, where the QoS configuration information includes the first synchronization time parameter.

The access network device may establish a QoS flow that has a synchronous association when establishing a protocol data unit (protocol data unit, PDU) session with the core network element. Specifically, the process includes: The SMF sends the QoS configuration information to the access network device, where the QoS configuration information includes the first synchronization time parameter.

Optionally, the QoS configuration information may be a QoS profile (QoS profile).

Based on the foregoing solution, the access network device and the core network element may establish the QoS flow that has the synchronous association, so that the first QoS data flow and the second QoS data flow can be transmitted in the QoS flow that has the synchronous association, to ensure that a data flow in the first data unit arrives at the terminal device with a delay less than the first synchronization time parameter.

With reference to the first aspect, in some implementations of the first aspect, the first access network resource includes a first data radio bearer, and the second access network resource includes a second data radio bearer.

It should be understood that, in the 3rd generation partnership project (3rd generation partnership project, 3GPP), the access network resource is a data radio bearer.

The first access network resource and the second access network resource may be the same or may be different. This is not limited in this application.

In other words, a first data flow and a second data flow may be transmitted by using a same access network resource, or may be transmitted by using different access network resources.

Based on the foregoing solution, the data flow is transmitted through the data radio bearer, for better compatibility with an existing protocol.

With reference to the first aspect, in some implementations of the first aspect, the first identifier is carried at least one of the following data packets: a data packet of an internet protocol (Internet protocol, IP) layer, a data packet of a user datagram protocol (user datagram protocol, UDP) layer, a data packet of a real-time transport protocol (real-time transport protocol, RTP) layer, and a data packet of a protocol layer between the UDP layer and the RTP layer.

That the first identifier is carried in the data packet of the UDP layer may be understood as that when encapsulating the data packet, an application server encapsulates the first identifier in a packet header of the UDP layer. Similarly, when encapsulating the data packet, the application server may encapsulate the first identifier in a packet header of the RTP layer, or encapsulate the first identifier in a packet header of the protocol layer between the UDP layer and the RTP layer, or encapsulate the first identifier in a packet header of the IP layer.

Optionally, when the first identifier is carried in the data packet of the IP layer, an IP may be the internet protocol version 6 (Internet Protocol version 6, IPv6).

Based on the foregoing solution, the first identifier may be added to the IP layer, the UDP layer, the RTP layer, or the protocol layer between the UDP layer and the RTP layer, to help the access network device perform parsing and obtain the first identifier.

With reference to the first aspect, in some implementations of the first aspect, the core network element is a user plane function network element or the session management function network element.

The first identifier may be from the user plane function network element, or may be from the user plane function network element and the session function network element.

Based on the foregoing solution, the access network device may determine, based on the first identifier from the user plane function network element or from the session management function network element, that the first data flow and the second data flow belong to a same data unit, to perform corresponding scheduling on data flows of the same data unit.

According to a second aspect, a data transmission method is provided. The method may be performed by a terminal device, or may be performed by a chip or a circuit disposed in the terminal device, or may be implemented by a logical module or software that can implement all or some functions of the terminal device. This is not limited in this application.

The method includes: obtaining a second identifier, where the second identifier indicates that a third QoS data flow and a fourth QoS data flow belong to a second data unit; and based on the second identifier and a second synchronization time parameter, mapping the third QoS data flow and the fourth QoS data flow respectively to a third access network resource and a fourth access network resource and sending the third QoS data flow and the fourth QoS data flow to an access network device, where the second synchronization time parameter indicates a maximum interval between a moment at which sending of the third QoS data flow is completed and a moment at which sending of the fourth QoS data flow is completed.

Optionally, when transmitted data is data in a video service or data in an XR service, the second data unit may be a video frame, a video frame slice, or a video frame tile.

Optionally, the second data unit may alternatively be an application data unit, a tactile multi-flow signal, a media unit, or a protocol data unit.

It should be noted that "the terminal device obtains the second identifier" may mean that an access stratum of the terminal device receives the second identifier from an upper layer of the terminal device. The upper layer may be an IP layer, an application layer, or the like. The access stratum may include protocol layers such as a radio resource control (radio resource control, RRC) layer, a service data adaptation protocol (service data adaptation protocol, SDAP) layer, a packet data convergence protocol (packet data convergence protocol, PDCP) layer, a radio link control (radio link control, RLC) layer, and a media access control (media access control, MAC) layer.

According to the solution in embodiments of this application, the terminal device may obtain the second identifier, perform access network resource mapping based on the second identifier and the second synchronization time parameter, and send the third QoS data flow and the fourth QoS data flow to the access network device, so that an interval between the moment at which sending of the third QoS data flow in the second data unit to the access network device is completed and the moment at which sending of the fourth QoS data flow in the second data unit to the access network device is completed is less than time indicated by the second synchronization time parameter, and a time difference between time at which various parts of data in the second data unit arrive at the access network device is reduced. This helps a destination device improve decoding precision, and further improves user experience.

With reference to the second aspect, in some implementations of the second aspect, the method further includes: receiving QoS rule information from a session management function network element, where the QoS rule information includes the second synchronization time parameter.

The terminal device may establish a QoS flow that has a synchronous association when establishing a PDU session with a core network element. Specifically, the process includes: The SMF sends the QoS rule information to the terminal device, where the QoS rule information includes the second synchronization time parameter.

With reference to the second aspect, in some implementations of the second aspect, the method further includes: sending first request information to the session management function network element, where the first request information is used to request the second synchronization time parameter from the session management function network element.

An application layer of UE may notify the SMF of a core network of an uplink synchronization requirement of a service. One possible implementation is to notify the SMF of the core network of the uplink synchronization requirement of the service when a service request (Service request) is sent. Another possible implementation is to notify the SMF of the core network of the uplink synchronization requirement of the service when a PDU session establishment request (PDU session establishment request) is sent. The uplink synchronization requirement specifically includes a size of an uplink data flow, an association relationship between data flows, and the like.

With reference to the second aspect, in some implementations of the second aspect, the third access network resource includes a third data radio bearer, and the fourth access network resource includes a fourth data radio bearer.

With reference to the second aspect, in some implementations of the second aspect, the second identifier is carried in at least one of the following data packets: a data packet of an internet protocol IP layer, a data packet of a user datagram protocol UDP layer, a data packet of a real-time transport protocol RTP layer, and a data packet of a protocol layer between the UDP layer and the RTP layer.

That the second identifier is carried in the data packet of the UDP layer may be understood as that when encapsulating the data packet, the terminal device encapsulates the second identifier in a packet header of the UDP layer. Similarly, when encapsulating the data packet, the terminal device may encapsulate the second identifier in a packet header of the RTP layer, or encapsulate the second identifier in a packet header of the protocol layer between the UDP layer and the RTP layer, or encapsulate the second identifier in a packet header of the IP layer.

Optionally, when the second identifier is carried in the data packet of the IP layer, an IP may be the internet protocol version 6 (Internet Protocol version 6, IPv6).

According to a third aspect, a communication apparatus is provided. The apparatus may be an access network device, or may be a chip or a circuit disposed in the access network device, or may be a logical module or software that can implement all or some functions of the access network device. This is not limited in this application.

The apparatus includes: an interface unit, configured to receive a first identifier from a core network element, where the first identifier indicates that a first quality of service QoS data flow and a second QoS data flow belong to a first data unit; and
a processing unit, configured to: based on the first identifier and a first synchronization time parameter, map the first QoS data flow and the second QoS data flow respectively to a first access network resource and a second access network resource and send the first QoS data flow and the second QoS data flow to a terminal device, where the first synchronization time parameter indicates a maximum interval between a moment at which sending of the first QoS data flow is completed and a moment at which sending of the second QoS data flow is completed.

With reference to the third aspect, in some implementations of the third aspect, the interface unit is further configured to receive QoS configuration information from a session management function network element, where the QoS configuration information includes the first synchronization time parameter.

With reference to the third aspect, in some implementations of the third aspect, the first access network resource includes a first data radio bearer, and the second access network resource includes a second data radio bearer.

With reference to the third aspect, in some implementations of the third aspect, the first identifier is carried in at least one of the following data packets: a data packet of an internet protocol IP layer, a data packet of a user datagram protocol UDP layer, a data packet of a real-time transport protocol RTP layer, and a data packet of a protocol layer between the UDP layer and the RTP layer.

With reference to the third aspect, in some implementations of the third aspect, the core network element is a user plane function network element or the session management function network element.

According to a fourth aspect, a communication apparatus is provided. The apparatus may be a terminal device, or may be a chip or a circuit disposed in the terminal device, or may be a logical module or software that can implement all or some functions of the terminal device. This is not limited in this application.

The apparatus includes: a processing unit, configured to obtain a second identifier, where the second identifier indicates that a third QoS data flow and a fourth QoS data flow belong to a second data unit; and based on the second identifier and a second synchronization time parameter, map the third QoS data flow and the fourth QoS data flow respectively to a third access network resource and a fourth access network resource and send the third QoS data flow and the fourth QoS data flow to an access network device, where the second synchronization time parameter indicates a maximum interval between a moment at which sending of the third QoS data flow is completed and a moment at which sending of the fourth QoS data flow is completed.

With reference to the fourth aspect, in some implementations of the fourth aspect, the apparatus further includes an interface unit, configured to receive QoS rule information from a session management function network element, where the QoS rule information includes the second synchronization time parameter.

With reference to the fourth aspect, in some implementations of the fourth aspect, the interface unit is further configured to send first request information to the session management function network element, where the first request information is used to request the second synchronization time parameter from the session management function network element.

With reference to the fourth aspect, in some implementations of the fourth aspect, the third access network resource includes a third data radio bearer, and the fourth access network resource includes a fourth data radio bearer.

With reference to the fourth aspect, in some implementations of the fourth aspect, the second identifier is carried in at least one of the following data packets: a data packet of an internet protocol IP layer, a data packet of a user datagram protocol UDP layer, a data packet of a real-time transport protocol RTP layer, and a data packet of a protocol layer between the UDP layer and the RTP layer.

According to a fifth aspect, this application provides a communication apparatus. The apparatus includes at least one processor. The at least one processor is coupled to at least one memory. The at least one processor is configured to execute a computer program or instructions stored in the at least one memory, to enable the apparatus to perform the method according to the first aspect and the second aspect and any one of the possible implementations of the first aspect and the second aspect.

According to a sixth aspect, this application provides a computer-readable medium. The computer-readable storage medium stores a computer program and instructions. When the computer program or the instructions are run on a computer, the computer may be enabled to implement the method according to the first aspect and the second aspect and any one of the possible implementations of the first aspect and the second aspect.

According to a seventh aspect, this application provides a computer program product, including a computer program or instructions. When the computer program or the instructions are executed, the computer program product is configured to implement the method according to the first aspect and the second aspect and any one of the possible implementations of the first aspect and the second aspect.

According to an eighth aspect, this application provides a chip system, including a processor. The processor is configured to execute a computer program or instructions in a memory, to enable the chip system to implement the method according to the first aspect and the second aspect and any one of the possible implementations of the first aspect and the second aspect.

According to a ninth aspect, this application provides a communication apparatus. The apparatus includes a processor. The processor is configured to perform the method according to the first aspect and the second aspect and any one of the possible implementations of the first aspect and the second aspect.

For beneficial effects of the foregoing second aspect to the ninth aspect and the possible implementations of any aspect, refer to beneficial effects of the first aspect and the possible implementations of the first aspect.

### BRIEF DESCRIPTION OF DRAWINGS

FIG. 1 is a schematic of a network architecture to which a method according to an embodiment of this application is applicable;
FIG. 2 is another schematic of a network architecture to which a method according to an embodiment of this application is applicable;
FIG. 3 is another schematic of a network architecture to which a method according to an embodiment of this application is applicable;
FIG. 4 is a schematic of a transmission process of a multimedia service according to an embodiment of this application;
FIG. 5 is a schematic flowchart of a data transmission method according to this application;
FIG. 6 is another schematic flowchart of a data transmission method according to this application;
FIG. 7 is another schematic flowchart of a data transmission method according to this application;
FIG. 8 is another schematic flowchart of a data transmission method according to this application;
FIG. 9 is another schematic flowchart of a data transmission method according to this application;
FIG. 10 is a schematic block diagram of a communication apparatus according to this application; and
FIG. 11 is a block diagram of a structure of a communication apparatus according to an embodiment of this application.

### DESCRIPTION OF EMBODIMENTS

The following describes technical solutions of embodiments in this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a fifth generation (5th generation, 5G) system, a new radio (new radio, NR) system, or another evolved communication system.

The technical solutions provided in this application may be further applied to a future communication system, for example, a 6th generation mobile communication system. This is not limited in this application.

The technical solutions provided in this application may further be applied to machine type communication (machine type communication, MTC), a long term evolution-machine (long term evolution-machine, LTE-M) technology, a device to device (device to device, D2D) network, a machine to machine (machine to machine, M2M) network, an internet of things (internet of things, IoT) network, or another network. The IoT network may include, for example, an internet of vehicles. Communication manners in an internet of vehicles system are collectively referred to as vehicle to X (vehicle to X, V2X, where X may stand for anything). For example, the V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, or the like.

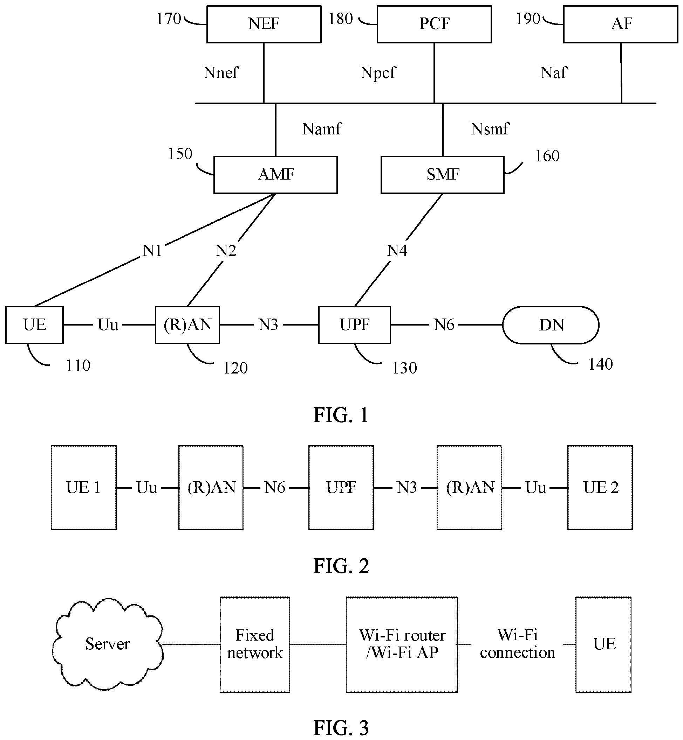

FIG. 1 is a schematic of a network architecture applicable to an embodiment of this application. As shown in FIG. 1, the network architecture may include user equipment 110, a (radio) access network device 120, a user plane network element 130, a data network 140, an access management network element 150, a session management network element 160, a network exposure network element 170, a policy control network element 180, an application network element 190, and the like. The following separately describes the network elements in the network architecture.
1. User equipment (user equipment, UE) 110: The user equipment may also be referred to as a terminal, an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a pad (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device that has a wireless communication function, a computing device or another processing device connected to a wireless modem, a vehicle-mounted device, a wearable device, a terminal in a 5G network, a terminal in a future evolved network, or the like.

The wearable device may also be referred to as a wearable intelligent device, and is a general term of wearable devices, such as glasses, gloves, watches, clothes, and shoes, that are intelligently designed and developed for daily wear by applying wearable technologies. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

2. (Radio) access network (radio access network, (R)AN) device 120: An access network device may also be referred to as an access device. The (R)AN can manage a radio resource, provide an access service for user equipment, and complete forwarding of user equipment data between the user equipment and a core network. The (R)AN may also be understood as a base station in a network.

For example, the access network device in embodiments of this application may be any communication device that has a wireless transceiver function for communicating with the user equipment. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP) or a transmission reception point (transmission reception point, TRP), or the like. Alternatively, the access network device may be a gNB or a transmission point (TRP or TP) in a 5G system such as an NR system, or one or a group of antenna panels (including a plurality of antenna panels) of a base station in a 5G system. Alternatively, the access network device may be a network node constituting a gNB or a transmission point, such as a baseband unit (BBU) or a distributed unit (distributed unit, DU). It may be understood that all or some functions of the access network device in this application may alternatively be implemented by using a software function running on hardware, or may be implemented by using a virtualization function instantiated on a platform (for example, a cloud platform).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information of the RRC layer is generated by the CU, and eventually encapsulated into PHY layer information by the PHY layer of the DU, or is converted from the PHY layer information. Therefore, in the architecture, higher layer signaling such as RRC layer signaling may also be considered to be sent by the DU or sent by the DU and AAU. It may be understood that the access network device may be a device including one or more of a CU node, a DU node, or an AAU node. In addition, the CU may be classified as an access network device in the radio access network (radio access network, RAN), or the CU may be classified as an access network device in the core network (core network, CN). This is not limited in this application.

In this application, the access network device may establish a data radio bearer (data radio bearer, DRB).

3. User plane network element 130: The user plane network element serves as an interface to the data network, and completes functions such as user plane data forwarding, session/flow-level charging statistics, and bandwidth throttling. In other words, the user plane network element performs packet routing and forwarding, quality of service (quality of service, QoS) processing of the user plane data, and the like.

In a long term evolution (long term evolution, LTE) communication system, the user plane network element may be a serving gateway user plane (serving gateway user plane, SGW-U), a packet data network gateway user plane (packet data network gateway user plane, PGW-U), or a network element in which an SGW-U and a PGW-U are co-deployed. In a 5G communication system, the user plane network element may be a user plane function (user plane function, UPF) network element.

4. Data network 140: The data network provides a carrier service, an internet access service, or a third-party service. The data network includes a server, where a server end implements video source coding and rendering.

In the 5G communication system, the data network may be a data network (data network, DN).

5. Access management network element 150: The access management network element is mainly for mobility management, access management, and the like, and for implementing functions, for example, lawful interception and access authorization/authentication, other than session management in functions of a mobility management entity (mobility management entity, MME).

In an LTE communication system, the access management network element may be an MME network element. In the 5G communication system, the access management network element may be an access and mobility management function (access and mobility management function, AMF), and mainly performs functions such as mobility management and the access authentication/authorization. In addition, the access management network element is further responsible for transferring a user policy between a terminal and a policy control function (policy control function, PCF) network element.

6. A session management network element 160: The session management network element is mainly for session management, allocation and management of an internet protocol (internet protocol, IP) address of user equipment, selection of an endpoint that can manage a user plane function interface and a policy control and charging function interface, downlink data notification, and the like.

In an LTE communication system, the session management network element may be a serving gateway control plane (serving gateway control plane, SGW-C), a packet data network gateway control plane (packet data network gateway control plane, PGW-C), or a network element in which an SGW-C and a PGW-C are co-deployed. In the 5G communication system, the session management network element may be a session management function (session management function, SMF) network element, and completes terminal IP address allocation, UPF selection, charging and QoS policy control, and the like.

7. Network exposure network element 170: In the LTE communication system, the network exposure network element may be a service capability exposure function (service capability exposure function, SCEF) network element. In the 5G communication system, the network exposure network element may be a network exposure function (network element function, NEF) network element, and is mainly for exposing a service and a capability of a 3GPP network function to the AF, and may also enable the AF to provide information for the 3GPP network function.

8. Policy control network element 180: The policy control network element includes a user subscription data management function, a policy control function, a charging policy control function, and quality of service (quality of service, QoS) control. The policy control network element is for guiding a unified policy framework of a network behavior, and provides policy rule information and the like for a control plane function network element (for example, the AMF and the SMF network element).

In the LTE communication system, the policy control network element may be a policy control and charging function (policy control and charging function, PCRF). In the 5G communication system, the policy control network element may be a PCF.

In the 5G communication system, the application network element may be a network slice selection function (network slice selection function, NSSF) network element.

9. Application network element 190: In the 5G communication system, the application network element may be an application function (application function, AF) network element that indicates an application function of a third-party or an operator. The application network element is an interface for a 5G network to obtain external application data, and is mainly for transferring a requirement of an application side on a network side.

In a future communication system, for example, a 6G communication system, the foregoing network elements or the devices may still use names of the network elements or the devices in the 4G or 5G communication system, or may have another name. This is not limited in embodiments of this application. A function of the foregoing network elements or the devices may be completed by one independent network element, or may be completed by several network elements together. During actual deployment, network elements in a core network may be deployed on a same physical device or different physical devices. For example, in a possible deployment, an AMF and an SMF may be deployed on a same physical device. For another example, a network element in a 5G core network and a network element in a 4G core network may be deployed on a same physical device. This is not limited in embodiments of this application.

It may be understood that FIG. 1 is merely an example, and does not constitute any limitation on the protection scope of this application. The communication method according to an embodiment of this application may further relate to a network element not shown in FIG. 1. Certainly, the communication method according to an embodiment of this application may only include some network elements shown in FIG. 1.

In the network architecture shown in FIG. 1, the terminal is connected to the AMF through an N1 interface, the (R)AN is connected to the AMF through an N2 interface, and the (R)AN is connected to the UPF through an N3 interface. UPFs are connected to each other through an N9 interface, and the UPF is connected to a DN through an N6 interface. The SMF controls the UPF through an N4 interface.

It may be understood that the foregoing network architecture applied to embodiments of this application is merely an example for description, and the network architecture applicable to embodiments of this application is not limited thereto. Any network architecture that can implement the functions of the foregoing network elements is applicable to embodiments of this application.

For example, FIG. 2 is another schematic of a network architecture applicable to an embodiment of this application. As shown in FIG. 2, the architecture is in a terminal-network-terminal architecture scenario. The scenario may be a tactile internet (tactile internet, TI). One terminal is a tactile user and a manual system interface in a master domain, and the other terminal is a remote control robot or a remote operator in a controlled domain. A core network and an access network for network transmission include LTE, 5G, or next-generation radio 6G. The master domain receives an audio/video feedback signal from the controlled domain. With the help of commands and feedback signals, the master domain and the controlled domain are connected through a bidirectional communication link on a network domain, to form a global control ring.

For another example, FIG. 3 is another schematic of a network architecture applicable to an embodiment of this application. As shown in FIG. 3, the architecture is in a Wi-Fi scenario. In this scenario, a cloud server transmits XR media data or a common video to a terminal (XR device) through a fixed network, a Wi-Fi router/AP/set-top box.

With the continuous development of a 5th generation (5th generation, 5G) communication system, a data transmission delay is continuously reduced and a transmission capacity is increasing. The 5G communication system is progressively used for some multimedia services that require high real-time performance, such as video transmission, cloud gaming (cloud gaming, CG), extended reality (extended reality, XR), and TI. The XR includes virtual reality (virtual reality, VR) and augmented reality (augmented reality, AR). For multimedia services that require high real-time performance, how to ensure a quality of service (quality of service, QoS) for a user has become a focus of current research.

The following first briefly describes a transmission process of a multimedia service.

A source end (for example, an application server (application server, AS) or a terminal device) uses a scalable coding technology to perform source coding on to-be-sent data. The scalable coding technology means that the source end generates two-flow or multi-flow data by splitting generated data. For example, for a video service, the scalable coding technology includes scalable video coding (Scalable Video Coding, SVC) defined in H.264 standard, scalability extension (scalability extension of HEVC, SHVC) of high efficiency video coding (high efficiency video coding, HEVC) defined in H.265 standard, and the like. During coding of the SVC and the SHVC, a base layer (base layer, BL) data flow and an enhancement layer (enhancement layer, EL) data flow are obtained for same data. There is only one base layer data flow. A destination device may decode basic video image content based on the base layer data flow. However, a frame rate, a resolution, and image quality are low. There may be one or more enhancement layer data flows. Data of the enhancement layer data flow is used to improve the frame rate, the resolution, and the image quality. If there is no base layer data flow but only the enhancement layer data flow, the destination device cannot decode the content.

For downlink data, the application server inputs the generated data of the multimedia service into a source encoder, for example, an SVC encoder. The source encoder outputs the data as the base layer data flow and the enhancement layer data flow. The base layer data flow enters a base layer encoder for further coding, and the enhancement layer data flow enters an enhancement layer encoder for further coding. After the coding is completed, the application server separately transmits the base layer data flow and the enhancement layer data flow to the UPF. The UPF configures different QoS parameters for different data flows. For example, the base layer data flow is configured with QoS 1 with a high requirement on a delay and reliability, and the enhancement layer data flow is configured with QoS 2 with a low requirement on the delay and the reliability. In this way, the base layer data flow may be transmitted to the access network device through a flow (flow) corresponding to QoS 1, that is, QoS flow 1. The enhancement layer data flow may be transmitted to the access network device through a flow corresponding to QoS 2, that is, QoS flow 2. Further, the access network device may map the base layer data flow and the enhancement layer data flow to access network resources respectively, and transmit the base layer data flow and the enhancement layer data flow to the terminal device.

For uplink data, a case is similar. The only difference is that the coding of the multimedia service, the QoS configuration (including mapping a data packet of a data flow to a QoS flow according to a QoS rule), and mapping from the QoS flow to an access network resource are all completed on the terminal device. The terminal device separately sends the mapped base layer data flow and the mapped enhancement layer data flow to the access network device. The access network device transmits mapped base layer data flow and the mapped enhancement layer data flow to the application server through the UPF.

Through traffic distribution and transmission, reliable transmission of the base layer data flow can be ensured, and the requirement of the enhancement layer data flow on the delay and the reliability is lowered, so that a transmission system capacity is significantly increased while a low delay characteristic of the multimedia service is ensured.

The data of the multimedia service usually arrives periodically based on the frame rate. However, for the downlink data, due to factors such as server coding and fixed network/core network transmission, different data flows of same data arrive at the access network device at different time. For the uplink data, due to factors such as terminal device coding and mapping, different data flows of a same frame of the multimedia service arrive at the access network device at different time. For the uplink data or the downlink data, jitter occurs in arrivals of data flows of some frames of the multimedia service. The jitter may also be referred to as a variable delay. It refers to a difference between ideal arrival time and actual arrival time of a data flow.

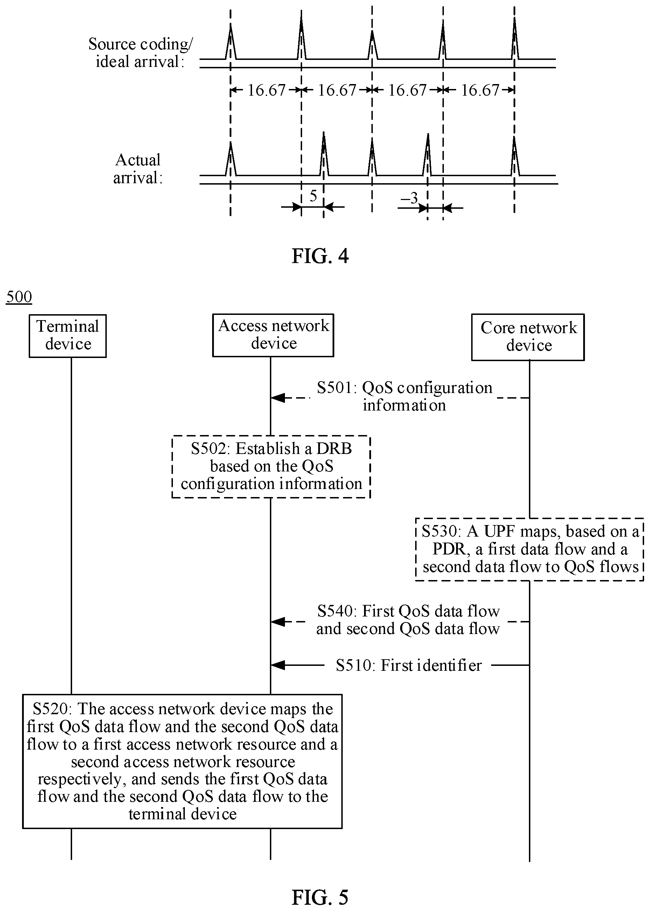

FIG. 4 is a schematic of a transmission process of a multimedia service according to an embodiment of this application. As shown in FIG. 4, for a video with a frame rate of 60 frames per second (frames per second, FPS), ideally, a base layer data flow of an image frame arrives at an interval of 16.67 milliseconds. However, an actual situation is as follows: A data flow of the 2^{nd} frame arrives 5 ms later, that is, jitter = 5 ms. A data flow of the 4^{th} frame arrives 3 ms earlier, that is, jitter = -3 ms. For the enhancement layer data flow, a similar case may also occur, except that a frame that generates the jitter is different and duration of the jitter is different.

When the jitter occurs in both the base layer data flow and the enhancement layer data flow of a same video frame, user experience is affected. For example, for a downlink service, the jitter may cause a data packet that completes transmission within a packet delay budget (packet delay budget, PDB) to miss display time of a terminal device, so that problems such as frame freezing, artifacts, and black borders occur on the terminal device. For an uplink service, the jitter affects source data used by a core network/fixed network for data processing, affecting to-be-processed data received by the terminal device.

In view of this, this application provides a data transmission method, so that a moment at which sending of QoS data belonging to a same data unit to a terminal device or an access network device is completed is less than a preset value. This helps the terminal device or an application server perform decoding, and further improves user experience.

FIG. 5 is a schematic flowchart of a data transmission method according to this application. In FIG. 5, the method is illustrated by using an example in which an access network device, a terminal device, and a core network device serve as execution bodies for interaction and illustration, but the execution bodies for interaction and illustration are not limited in this application. For example, the access network device in FIG. 5 may alternatively be a chip, a chip system, or a processor that supports the access network device in implementing the method, or may be a logical module or software that can implement all or some functions of the access network device. The terminal device in FIG. 5 may alternatively be a chip, a chip system, or a processor that supports the terminal device in implementing the method, or may be a logical module or software that can implement all or some functions of the terminal device. The core network device in FIG. 5 may alternatively be a chip, a chip system, or a processor that supports the core network device in implementing the method, or may be a logical module or software that can implement all or some functions of the core network device. It should be understood that the method 500 shown in FIG. 5 may be used for downlink data transmission.

S510: The access network device receives a first identifier from the core network element. The first identifier indicates that a first QoS data flow and a second QoS data flow belong to a first data unit.

In this application, "a first QoS data flow and a second QoS data flow belong to a first data unit" may be understood as that the first QoS data flow is a data flow obtained by performing QoS flow mapping on a first data flow in the first data unit, and the second QoS data flow is a data flow obtained by performing QoS flow mapping on a second data flow in the first data unit. The first data flow is transmitted from an application server to the terminal device, and may be referred to as the first data flow when passing through each node. After a UPF performs QoS flow mapping on the first data flow, the first data flow may also be referred to as the first QoS data flow. Similarly, the second data flow is transmitted from the application server to the terminal device, and may be referred to as the second data flow when passing through each node. After the UPF performs QoS flow mapping on the second data flow, the second data flow may also be referred to as the second QoS data flow.

Optionally, when transmitted data is data in a video service or data in an XR service, the first data unit may be a video frame, a video frame slice (slice), or a video frame tile (tile).

Optionally, the first data unit may alternatively be an application data unit (application data unit), a tactile multi-flow signal, a media unit (media unit), or a protocol data unit (protocol data unit).

In an implementation, the first identifier may be carried in a data packet of an internet protocol (Internet Protocol, IP) layer or a data packet of a user datagram protocol (user datagram protocol, UDP) layer, or may be carried in a data packet of a real-time transport protocol (real-time transport protocol, RTP) layer. Alternatively, a protocol layer is newly added between the UDP layer and the RTP layer, and the first identifier is carried in a data packet of the newly added protocol layer.

That the first identifier is carried in the data packet of the UDP layer may be understood as that when encapsulating the data packet, the application server encapsulates the first identifier in a packet header of the UDP layer. Similarly, when encapsulating the data packet, the application server may encapsulate the first identifier in a packet header of the RTP layer, or encapsulate the first identifier in a packet header of the protocol layer between the UDP layer and the RTP layer, or encapsulate the first identifier in a packet header of the IP layer.

Optionally, when the first identifier is carried in the data packet of the IP layer, an IP may be the internet protocol version 6 (Internet Protocol version 6, IPv6).

In an implementation, the core network element may be the UPF.

When coding the first data unit, the application server may code the first data unit into at least two flows of data, namely, the first data flow and the second data flow. The application server determines that both the first data flow and the second data flow belong to the first data unit. Therefore, during data packet encapsulation, the first identifier is added to all data packets that belong to the first data flow and all data packets that belong to the second data flow. After the encapsulation is completed, the first data flow and the second data flow are sent to the UPF. The UPF may perform QoS control based on a packet detection rule (packet detection rule, PDR). Specifically, all the data packets of the first data flow and all the data packets of the second data flow are mapped to corresponding QoS flows, namely, the first QoS data flow and the second QoS data flow, and the flows are sent to the access network device. When receiving the first QoS data flow and the second QoS data flow, the access network device may obtain the first identifier carried in the first QoS data flow and the second QoS data flow.

It should be understood that the first identifier is added to both the first QoS data flow and the second QoS data flow. Regardless of whether the first QoS data flow first arrives at the access network device or the second QoS data flow first arrives at the access network device, the access network device may determine that the first data flow/second data flow is a data flow that needs to be synchronized, to perform the method according to this application. This helps improve processing efficiency of the access network device.

It should be further understood that, adding an identifier to a data flow essentially means adding an identifier to a data packet of the data flow during data encapsulation. A meaning thereof is the same in the following unless otherwise specified.

In a possible implementation, the first identifier may also be referred to as a synchronization group identifier (synchronization group identifier). Data packets of data flows that belong to a same data unit are labeled with a same synchronization group identifier.

Optionally, when a media service includes a plurality of data units, the application server may distinguish between different data units by using different identifiers. For example, an identifier added to a base layer data flow and an enhancement layer data flow of the 1^{st} frame of service #A is ID 0, and an identifier added to a base layer data flow and an enhancement layer data flow of the 2^{nd} frame of service #A is ID 1.

When a plurality of media services are sent, the application server may distinguish between different services by using different identifier segments. For example, IDs 0 to 4 may respectively represent the 1^{st} frame to the 5^{th} frame of service #B, IDs 5 to 9 may respectively identify the 1^{st} frame to the 5^{th} frame of service #C, for the 6^{th} frame and a frame following the 6^{th} frame of service #B, IDs 0 to 4 may be reused, and for the 6^{th} frame and a frame following the 6^{th} frame of service #C, IDs 5 to 9 may be reused. Specifically, an identifier added to a base layer data flow and an enhancement layer data flow of the 1^{st} frame of service #B is ID 0, an identifier added to a base layer data flow and an enhancement layer data flow of the 2^{nd} frame of media service #B is ID 1, ..., an identifier added to a base layer data flow and an enhancement layer data flow of the 6^{th} frame of service #B is ID 0, an identifier added to a base layer data flow and an enhancement layer data flow of the 7^{th} frame of media service #B is ID 1, ..., an identifier added to a base layer data flow and an enhancement layer data flow of the 1^{st} frame of service #C is ID 5, an identifier added to a base layer data flow and an enhancement layer data flow of the 2^{nd} frame of media service #C is ID 6, ..., an identifier added to a base layer data flow and an enhancement layer data flow of the 6^{th} frame of service #C is ID 5, an identifier added to a base layer data flow and an enhancement layer data flow of the 7^{th} frame of media service #C is ID 6, and so on. The data arrives at the access network device through the UPF. The access network device may determine, based on the identifiers added by the application server, that data flows that have a same identifier belong to a same data unit.

It should be understood that, in this case, the first identifier is an identifier added by the application server.

Optionally, when a plurality of media services are sent, the application server may add a same identifier only to data flows that belong to a same data unit, without distinguishing between data units of different services. However, when a QoS flow is established, the core network device adds first information to the PDR. The first information indicates an available identifier of the QoS flow. QoS flows that belong to a same data unit may be configured with same first information. Therefore, when performing QoS flow mapping, the UPF may update, based on the first information, the identifier added by the application server, to distinguish between the data units of the different services. For example, IDs 0 to 9 may respectively represent the 1^{st} frame to the 10^{th} frame of service #B, IDs 0 to 9 respectively identify the 1^{st} frame to the 10^{th} frame of service #C, for the 10^{th} frame and a frame following the 10^{th} frame of service #B, IDs 0 to 9 may be reused, and for the 10^{th} frame and a frame following the 10^{th} frame of service #C, IDs 0 to 9 may also be reused. Specifically, an identifier added to a base layer data flow and an enhancement layer data flow of the 1^{st} frame of service #B is ID 0, an identifier added to a base layer data flow and an enhancement layer data flow of the 2^{nd} frame of media service #B is ID 1, ..., an identifier added to a base layer data flow and an enhancement layer data flow of the 6^{th} frame of service #B is ID 5, an identifier added to a base layer data flow and an enhancement layer data flow of the 7^{th} frame of media service #B is ID 6, ..., an identifier added to a base layer data flow and an enhancement layer data flow of the 1^{st} frame of service #C is ID 0, an identifier added to a base layer data flow and an enhancement layer data flow of the 2^{nd} frame of media service #C is ID 1, ..., an identifier added to a base layer data flow and an enhancement layer data flow of the 6^{th} frame of service #C is ID 5, an identifier added to a base layer data flow and an enhancement layer data flow of the 7^{th} frame of media service #C is ID 6, and so on. For QoS flow 1 and QoS flow 2, first information included in the PDR rule of the UPF is IDs 0 to 4. For QoS flow 3 and QoS flow 4, first information included in the PDR rule of the UPF is IDs 5 to 9. In this case, the UPF may determine, based on the PDR, that the base layer data flow and the enhancement layer data flow of service #B are mapped to QoS flow 1 and QoS flow 2 respectively, and the base layer data flow and the enhancement layer data flow of service #C are mapped to QoS flow 3 and QoS flow 4 respectively. Therefore, the UPF updates, based on the first information, the identifier of the base layer data flow and the enhancement layer data flow of the 6^{th} frame of service #B to ID 0, updates the identifier of the base layer data flow and the enhancement layer data flow of the 7^{th} frame of media service #B to ID 1, and so on; but the identifiers of the 1^{st} frame to the 5^{th} frame of service #B remain unchanged. The UPF updates the identifier of the base layer data flow and the enhancement layer data flow of the 1^{st} frame of service #C to ID 5, updates the identifier of the base layer data flow and the enhancement layer data flow of the 2^{nd} frame of media service #C to ID 6, and so on; but the identifiers of the 6^{th} frame to the 10^{th} frame of service #C remain unchanged. The access network device may determine, based on the identifiers updated by the UPF, that data flows that have a same identifier in QoS flow 1 and QoS flow 2 belong to a same data unit, and data flows that have a same identifier in QoS flow 3 and QoS flow 4 belong to a same data unit.

It should be understood that, in this case, the first identifier is an identifier updated by the UPF.

In an implementation, the core network element may be the UPF and/or an SMF.

Optionally, when a plurality of media services are sent, the application server may add a same identifier only to data flows that belong to a same data unit, without distinguishing between different data units. However, when a QoS flow is established, the core network device adds a first association identifier to a QoS profile (QoS profile) and the PDR. The first association identifier indicates a QoS flow identifier (QoS flow identifier, QFI) associated with the QoS flow. QoS flows associated with each other are separately configured with first association identifiers, so that the same data unit can be identified by using the first association identifiers. For example, a QFI of QoS flow A is A, and a QFI of QoS flow B is B. If data in QoS flow A and data in QoS flow B belong to a same data unit, in the QoS profile (QoS profile) and the PDR, a first association identifier of QoS flow A is B, and a first association identifier of QoS flow B is A. Therefore, when the UPF performs QoS flow mapping, the data units of the different services can be distinguished between based on the first association identifiers. For example, IDs 0 to 9 may respectively represent the 1^{st} frame to the 10^{th} frame of service #B, IDs 0 to 9 respectively identify the 1^{st} frame to the 10^{th} frame of service #C, for the 10^{th} frame and a frame following the 10^{th} frame of service #B, IDs 0 to 9 may be reused, and for the 10^{th} frame and a frame following the 10^{th} frame of service #C, IDs 0 to 9 may also be reused. Specifically, an identifier added to a base layer data flow and an enhancement layer data flow of the 1^{st} frame of service #B is ID 0, an identifier added to a base layer data flow and an enhancement layer data flow of the 2^{nd} frame of media service #B is ID 1, ..., an identifier added to a base layer data flow and an enhancement layer data flow of the 6^{th} frame of service #B is ID 5, an identifier added to a base layer data flow and an enhancement layer data flow of the 7^{th} frame of media service #B is ID 6, ..., an identifier added to a base layer data flow and an enhancement layer data flow of the 1^{st} frame of service #C is ID 0, an identifier added to a base layer data flow and an enhancement layer data flow of the 2^{nd} frame of media service #C is ID 1, ..., an identifier added to a base layer data flow and an enhancement layer data flow of the 6^{th} frame of service #C is ID 5, an identifier added to a base layer data flow and an enhancement layer data flow of the 7^{th} frame of media service #C is ID 6, and so on. A QFI of QoS flow 1 is 1. A QFI of QoS flow 2 is 2. A QFI of QoS flow 3 is 3. A QFI of QoS flow 4 is 4. For QoS flow 1, a first association identifier included in the PDR rule of the UPF and the QoS profile of the access network device is QFI = 2. For QoS flow 2, a first association identifier included in the PDR rule of the UPF and the QoS profile of the access network device is QFI = 1. For QoS flow 3, a first association identifier included in the PDR rule of the UPF and the QoS profile of the access network device is QFI = 4. For QoS flow 4, a first association identifier included in the PDR rule of the UPF and the QoS profile of the access network device is QFI = 3. In this case, the UPF determines, based on the PDR, to map the base layer data flow and the enhancement layer data flow of service #B to QoS flow 1 and QoS flow 2 respectively, and map the base layer data flow and the enhancement layer data flow of service #C to QoS flow 3 and QoS flow 4 respectively. Therefore, the access network device may determine, based on the first association identifiers in the QoS profile, that data in QoS flow 1 and data in QoS flow 2 belong to a same data unit, and data in QoS flow 3 and data in QoS flow 4 belong to a same data unit, and determine, based on the identifiers added by the application server, that data flows that have a same identifier in QoS flow 1 and QoS flow 2 belong to a same data unit, and data flows that have a same identifier in QoS flow 3 and QoS flow 4 belong to a same data unit.

It should be understood that, in this case, the first identifier is a first association identifier and an identifier added by the application server.

S520: The access network device, based on the first identifier and a first synchronization time parameter, maps the first QoS data flow and the second QoS data flow respectively to a first access network resource and a second access network resource and sends the first QoS data flow and the second QoS data flow to the terminal device. The first synchronization time parameter indicates a maximum interval between a moment at which sending of the first QoS data flow is completed and a moment at which sending of the second QoS data flow is completed.

The access network device determines, based on the first identifier, that the first QoS data flow and the second QoS data flow belong to a same data unit, and then maps, based on the first synchronization time parameter, the QoS data flows that belong to the same data unit to corresponding access network resources. The first synchronization time parameter indicates the maximum interval between the moment at which sending of the first QoS data flow is completed and the moment at which sending of the second QoS data flow is completed. In other words, a time difference between the first access network resource and the second access network resource in time domain is less than time indicated by the first synchronization time parameter.

After mapping is completed, the access network device sends the first data flow and the second data flow in the first data unit to the terminal device by using the first access network resource and the second access network resource, so that a time difference between time at which the first data flow in the first data unit and the second data flow in the first data unit arrive at the terminal device is less than the time indicated by the first synchronization time parameter. Therefore, the terminal device can perform decoding by using the first data flow and the second data flow.

According to the solution in this embodiment of this application, the access network device may obtain the first identifier, perform access network resource mapping based on the first identifier and the first synchronization time parameter, and send the first QoS data flow and the second QoS data flow to the terminal device, so that an interval between the moment at which sending of the first QoS data flow in the first data unit to the terminal device is completed and the moment at which sending of the second QoS data flow in the first data unit to the terminal device is completed is less than the time indicated by the first synchronization time parameter, and a time difference between time at which various parts of data in the first data unit arrive at the terminal device is reduced. This helps the terminal device improve decoding precision, and further improves user experience.

Optionally, the access network device, based on the first identifier and the first synchronization time parameter, maps the first QoS data flow and the second QoS data flow respectively to the first access network resource and the second access network resource and sends the first QoS data flow and the second QoS data flow to the terminal device. In other words, the access network device determines, based on the first identifier, that the first QoS data flow and the second QoS data flow belong to the same data unit, then based on the first synchronization time parameter, maps the first QoS data flow and the second QoS data flow respectively to the first access network resource and the second access network resource and sends the mapped first data flow and the mapped second data flow to the terminal device based on the first identifier. The first access network resource is a transmission resource of the first data flow, and the second access network resource is a transmission resource of the second data flow.

Optionally, that the access network device, based on the first identifier and a first synchronization time parameter, maps the first QoS data flow and the second QoS data flow respectively to a first access network resource and a second access network resource and sends the first QoS data flow and the second QoS data flow to the terminal device includes: The access network device determines, based on the first identifier, that the first QoS data flow and the second QoS data flow belong to the same data unit. The access network device completes sending of the first QoS data flow at a first moment, and completes sending of the second QoS data flow at a second moment. An interval between the first moment and the second moment is less than the time indicated by the first synchronization time parameter.

Optionally, the first access network resource includes a first data radio bearer (data radio bearer, DRB), and the second access network resource includes a second data radio bearer.

It should be understood that, in the 3rd generation partnership project (3rd generation partnership project, 3GPP), the access network resource may be a data radio bearer.

The first access network resource and the second access network resource may be the same or may be different. This is not limited in this application.

In other words, the first data flow and the second data flow may be transmitted by using a same access network resource, or may be transmitted by using different access network resources.

Optionally, it may also be understood that the first identifier indicates that the first QoS data flow and the second QoS data flow belong to a same synchronization group, for example, belong to a first synchronization group, that is, need to be synchronized, or have a synchronization requirement. The 1^{st} QoS data flow and the last QoS data flow that belong to the first synchronization group meet the following relationship: An interval between a moment at which the access network device completes sending of the 1^{st} QoS data flow and a moment at which the access network device completes sending of the last QoS data flow is less than a first preset value. The first preset value is the same as a value of the time indicated by the first synchronization time parameter.

It should be understood that a moment at which sending of the first data flow is completed is a moment at which sending of all data packets of the first data flow is completed. For another data flow, a meaning is similar to this. Details are not described herein again.

Optionally, the method 500 further includes S501: The access network device receives QoS configuration information from the SMF. The QoS configuration information includes the first synchronization time parameter.

The access network device may establish a QoS flow that has a synchronous association when establishing a PDU session with the core network element. Specifically, the process includes: The SMF sends the QoS configuration information to the access network device, where the QoS configuration information includes the first synchronization time parameter.

Optionally, the QoS configuration information may be the QoS profile.

Optionally, the method 500 further includes S502: The access network device establishes a DRB based on the QoS configuration information.

In an example, when establishing the QoS flow, the access network device may receive the QoS configuration information from the SMF. When needing to perform data transmission, the access network device may establish the DRB, and store a binding relationship between the QoS flow and the DRB. Specifically, during storage, the QoS flow is identified by using a QFI.

Optionally, the method 500 further includes S530: The UPF maps, based on the PDR, the first data flow and the second data flow to QoS flows, namely, the first QoS data flow and the second QoS data flow.

Specifically, when receiving the first data flow and the second data flow, the UPF performs QoS control based on the PDR, including: matching the first QoS flow with the first data flow, matching the second QoS flow with the second data flow, adding a first QFI to a packet header of a data packet of the first data flow, and adding a second QFI to a packet header of a data packet of the second data flow.

It should be understood that the PDR includes a correspondence between the first QFI and the first data flow and a correspondence between the second QFI and the second data flow. The first QFI identifies a QoS flow to which the first data flow needs to be mapped, and the second QFI identifies a QoS flow to which the second data flow needs to be mapped.

In an implementation, that the access network device maps the first QoS data flow and the second QoS data flow respectively to a first access network resource and a second access network resource based on the first identifier and a first synchronization time parameter includes: The access network device maps the first QoS data flow to a first DRB based on a binding relationship between the first QFI and the first DRB, and maps the second QoS data flow to a second DRB based on a binding relationship between the second QFI and the second DRB. The first QoS data flow includes the first QFI, and the second QoS data flow includes the second QFI.

Optionally, the QoS flow that has the synchronous association may be established when the PDU session is established. Specifically, the process includes: The SMF sends PDR information to the UPF.

Optionally, the PDR information includes the first synchronization time parameter.

Optionally, the method further includes S540: The access network device receives the first QoS data flow and the second QoS data flow from the core network device.

The core network device sends the first QoS data flow and the second QoS data flow to the access network device. The first identifier may be carried in the first QoS data flow and the second QoS data flow.

In the solution in this embodiment of this application, the time difference between the time at which various parts of data in the first data unit arrive at the terminal device is reduced. This helps the terminal device improve the decoding precision, and further improves user experience.

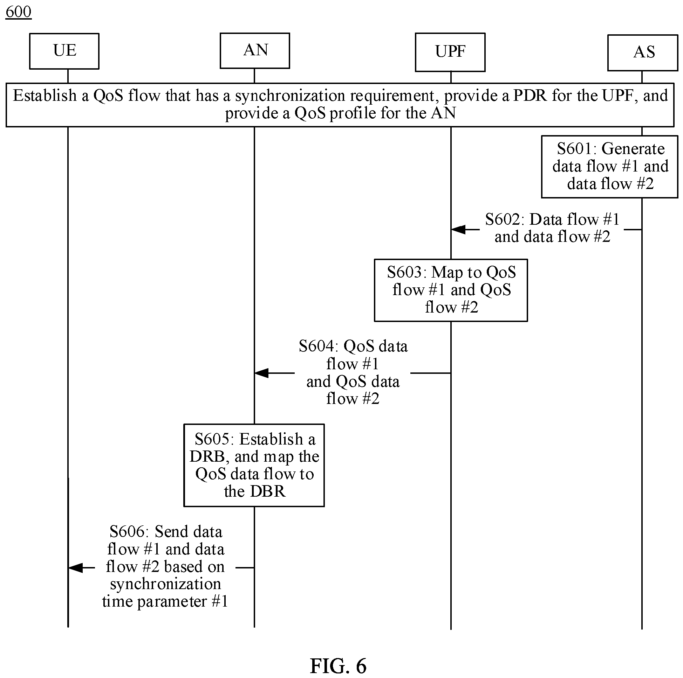

FIG. 6 is another schematic flowchart of a data transmission method according to this application. In FIG. 6, the method is illustrated by using an example in which UE, an AN, a UPF, an AMF, an SMF, a PCF, an AS, and the like serve as execution bodies for interaction and illustration, but the execution bodies for interaction and illustration are not limited in this application. For example, the execution bodies may alternatively be chips, chip systems, processors, logical modules, or software that support the UE, the AN, the UPF, the AMF, the SMF, the PCF, and the AS in implementing the method. It should be understood that the method 600 shown in FIG. 6 may be used as a specific implementation of the foregoing method 500. The UE may be considered as an example of the terminal device in the method 500. The AN may be considered as an example of the access network device in the method 500. The UPF, the AMF, the SMF, and the PCF each may be considered as an example of the core network device in the method 500.

Before data transmission, the UE, the AN, the UPF, the AMF, the SMF, the PCF, and the like may establish a QoS flow that has a synchronization requirement, including the following:
a: The SMF delivers a PDR to the UPF through an N4 interface. The PDR includes synchronization time parameter #1 (an example of the first synchronization time parameter). Optionally, when a first identifier is an identifier updated by the UPF, the PDR further includes first information. When the first identifier is association identifier #1 (an example of the first association identifier) and an identifier added by the application server, the PDR further includes association identifier #1.
b: The SMF configures a corresponding QoS profile based on a QoS requirement. The QoS profile includes synchronization time parameter #1. Optionally, when the first identifier is the identifier updated by the UPF, the QoS profile further includes the first information. When the first identifier is association identifier #1 and the identifier added by the application server, the QoS profile further includes association identifier #1. The AMF delivers the QoS profile to the AN through an N2 interface.

When establishment of the QoS flow is completed on a control plane, the established QoS flow may be used for downlink data transmission.

S601: The application server generates data flow #1 and data flow #2. Both data flow #1 and data flow #2 include identifier #1. Identifier #1 indicates that data flow #1 and data flow #2 belong to frame #1. Frame #1 is a specific frame of a downlink service.

The application server may use a scalable coding technology to separately code frame #1 (an example of the first data unit) to be coded, as a base layer data flow and an enhancement layer data flow. In this embodiment of this application, an example of one enhancement layer data flow is used for description. The base layer data flow and the enhancement layer data flow of frame #1 are respectively denoted as data flow #1 and data flow #2.

In a transport layer (for example, a TCP/IP layer) or a higher layer of the application server, the application server labels data packets of data flows that belong to a same data unit with the same identifier. Therefore, identifier #1 may be added to each of data packets of data flow #1 and data flow #2. A function of identifier #1 is to enable the UPF and the access network device to identify data packets that need to be synchronized. In other words, this facilitates identification of data packets that belong to a same frame.

For example, a protocol layer may be added between an RTP protocol and a UDP protocol, and identifier #1 is carried in a data packet of the protocol layer.

S602: The application server sends data flow #1 and data flow #2 to the UPF, and the UPF receives data flow #1 and data flow #2.

S603: The UPF maps data flow #1 and data flow #2 to QoS flow #1 and QoS flow #2, namely, QoS data flow #1 and QoS data flow #2 respectively based on the packet detection rule (packet detection rule, PDR).

Specifically, each PDR includes packet detection information (packet detection information, PDI), and the PDI defines a detailed rule for detecting a data packet, including synchronization time parameter #1 (an example of the first synchronization time parameter), for example, multiple flow synchronization transmission. Each QoS flow has one synchronization time parameter #1. Synchronization time parameter #1 indicates a maximum interval between a moment at which sending of data on a current QoS flow is completed and a moment at which sending of data on another QoS flow is completed. An identifier of the another QoS flow may be determined based on the first identifier. For an IPv4, IPv6, or IPv4v6 PDU session, the PDI further includes the following information: CN tunnel information (CN tunnel info), a network instance (Network instance), a QFI, an IP packet filter set as defined in clause 5.7.6.2 (IP Packet Filter Set as defined in clause 5.7.6.2), and an application identifier (Application Identifier). The application identifier is an index of a group of application detection rules configured in the UPF. For an Ethernet PDU session, the PDI includes the following information: CN tunnel information (CN tunnel info), a network instance (Network instance), a QFI, and an Ethernet packet filter set as defined in clause 5.7.6.3 (Ethernet Packet Filter Set as defined in clause 5.7.6.3). The QFI identifies a current QoS flow.

Optionally, the PDR may further include the foregoing first information. The first information indicates an available identifier of the QoS flow. QoS flows that belong to a same data unit may be configured with same first information. Therefore, when performing QoS flow mapping, the UPF may update, based on the first information, identifier #1 added by the application server, to distinguish between different data units. Alternatively, the PDR may further include the foregoing association identifier #1. Association identifier #1 indicates a QoS flow identifier QFI associated with the QoS flow. Therefore, when performing QoS flow mapping, the UPF may distinguish between different data units based on association identifier #1.

The UPF may match data flow #1 with data flow #2 based on the PDR, and may determine QoS parameters of data flow #1 and data flow #2 based on the QFI identifier in the PDR, to map the data packets of data flow #1 and data flow #2 to QoS flows that meet the QoS parameters, for example, to map the data packets of data flow #1 and data flow #2 to QoS flow #1 and QoS flow #2 respectively.

The UPF further adds QFI #1 and QFI #2 to the data packet of data flow #1 and the data packet of data flow #2 respectively. QFI #1 identifies QoS flow #1, and QFI #2 identifies QoS flow #2.

S604: The UPF sends QoS data flow #1 and QoS data flow #2 to the AN by using the QoS flows, and the AN receives QoS data flow #1 and QoS data flow #2.

S605: The AN establishes a DRB based on the QoS profile, and maps QoS data flow #1 and QoS data flow #2 to the DRB.

When establishing the QoS flow, the AN may establish the DRB based on synchronization time parameter #1 in the QoS profile, and store a binding relationship between the QoS flow and the DRB.

Optionally, the QoS profile may further include at least one of the following parameters: a 5G QoS identifier (5G QoS identifier, 5QI), an allocation and retention priority (ARP), a guaranteed flow bit rate (guaranteed flow bit rate, GFBR), a maximum flow bit rate (maximum flow bit rate, MFBR), notification control, a maximum packet loss rate (maximum packet loss rate, MPLR), a reflection QoS attribute (reflection QoS attribute, RQA), and the like. The 5QI is a scalar to be indexed to a corresponding 5G QoS characteristic. The ARP includes a priority level, a preemption capability, and a preemption vulnerability. The GFBR represents a bit rate that is expected to be provided for a GBR QoS flow. The MFBR represents a limited bit rate provided for a GBR QoS flow, namely, a maximum bit rate provided for the GBR QoS flow. If the bit rate is exceeded, a data packet can be discarded. The RQA indicates a service transmitted by using a corresponding QoS flow to use reflective QoS.

When receiving QoS data flow #1 and QoS data flow #2, the access network device maps QoS data flow #1 to DRB #1 based on QFI #1 in QoS data flow #1 and a stored binding relationship between QFI #1 and DRB #1. The access network device maps QoS data flow #2 to DRB #2 based on QFI #2 identifier in QoS data flow #2 and a stored binding relationship between QFI #2 and DRB #2.

S606: The AN communicates with the UE through the DRB, and schedules data flow #1 and data flow #2 based on the synchronization time parameter in the QoS profile.

For example, based on identifier #1 added by the AS, or identifier #1 updated by the UPF, or association identifier #1 and identifier #1 added by the AS, the AN determines that data flow #1 and data flow #2 belong to a same frame. Based on the synchronization time parameter that is of data flow #1 and data flow #2 and that is in the QoS profile, the AN determines that synchronization time is 3 ms. In other words, a maximum interval between a moment at which sending of data flow #1 is completed and a moment at which sending of data flow #2 is completed is 3 ms. It is assumed that a moment at which data flow #1 arrives at the AN is the 0^{th} ms, a moment at which data flow #2 arrives at the AN is the 4^{th} ms, and transmission of data flow #1 is completed at the 5^{th} ms. In this case, based on synchronization time parameter #1 in the QoS profile, the AN completes transmission of data flow #2 within 3 ms, in other words, before the 8^{th} ms.

S607: The UE decodes data flow #1, to obtain a base layer image of frame #1, and decodes data flow #2, to obtain an enhancement layer image of frame #1.

In the manner, it can be ensured that a delay with which sending of a data packet of the base layer data flow of frame #1 and a data packet of the enhancement layer data flow of frame #1 is completed is less than a preset value. This helps the terminal device perform decoding, and improves user experience.

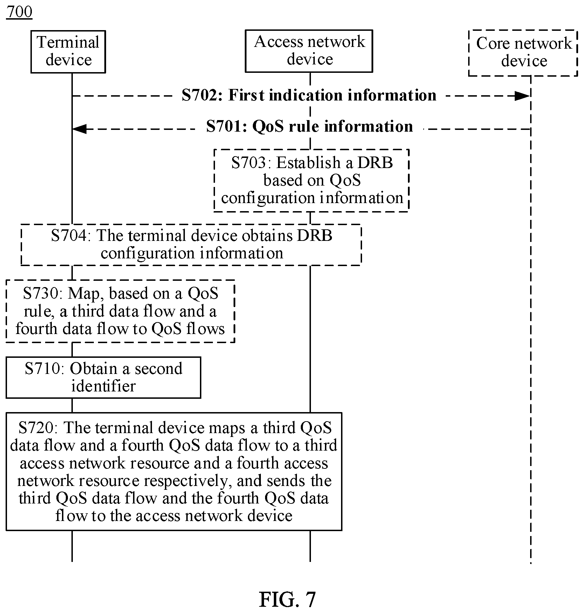

FIG. 7 is another schematic flowchart of a data transmission method according to this application. In FIG. 7, the method is illustrated by using an example in which an access network device, a terminal device, and a core network device serve as execution bodies for interaction and illustration, but the execution bodies for interaction and illustration are not limited in this application. For example, the access network device in FIG. 7 may alternatively be a chip, a chip system, or a processor that supports the access network device in implementing the method, or may be a logical module or software that can implement all or some functions of the access network device. The terminal device in FIG. 7 may alternatively be a chip, a chip system, or a processor that supports the terminal device in implementing the method, or may be a logical module or software that can implement all or some functions of the terminal device. The core network device in FIG. 7 may alternatively be a chip, a chip system, or a processor that supports the core network device in implementing the method, or may be a logical module or software that can implement all or some functions of the core network device. It should be understood that the method 700 shown in FIG. 7 may be used for uplink data transmission.

S710: The terminal device obtains a second identifier. The second identifier indicates that a third QoS data flow and a fourth QoS data flow belong to a second data unit.

In this application, "a third QoS data flow and a fourth QoS data flow belong to a second data unit" may be understood as that the third QoS data flow is a data flow obtained by performing QoS flow mapping on a third data flow in the second data unit, and the fourth QoS data flow is a data flow obtained by performing QoS flow mapping on a fourth data flow in the second data unit. The third data flow is transmitted from an application server to the terminal device, and may be referred to as the third data flow when passing through each node. After a UPF performs QoS flow mapping on the third data flow, the third data flow may also be referred to as the third QoS data flow. Similarly, the fourth data flow is transmitted from the application server to the terminal device, and may be referred to as the fourth data flow when passing through each node. After the UPF performs QoS flow mapping on the fourth data flow, the fourth data flow may also be referred to as the fourth QoS data flow.

Optionally, when transmitted data is data in a video service or data in an XR service, the second data unit may be a video frame, a video frame slice, or a video frame tile.

Optionally, the second data unit may alternatively be an application data unit, a tactile multi-flow signal, a media unit, or a protocol data unit.

In an implementation, the second identifier may be carried in a data packet of an IP layer or a UDP layer, or may be carried in a data packet of an RTP layer. Alternatively, a protocol layer is newly added between the UDP layer and the RTP layer, and the second identifier is carried in a data packet of the newly added protocol layer.

That the second identifier is carried in the data packet of the UDP layer may be understood as that when encapsulating the data packet, the terminal device encapsulates the second identifier in a packet header of the UDP layer. Similarly, when encapsulating the data packet, the terminal device may encapsulate the second identifier in a packet header of the RTP layer, or encapsulate the second identifier in a packet header of the protocol layer between the UDP layer and the RTP layer, or encapsulate the second identifier in a packet header of the IP layer.

Optionally, when the second identifier is carried in a data packet of the IP layer, an IP may be the internet protocol version 6 (Internet Protocol version 6, IPv6).

That the terminal device obtains a second identifier may mean that an access stratum of the terminal device receives the second identifier from an upper layer of the terminal device. The upper layer may be an application layer or a non-access stratum (non-access stratum, NAS). The non-access stratum may include the IP layer, the UDP layer, the RTP layer, and the like. The access stratum (access stratum, AS) may include protocol layers such as a radio resource control (radio resource control, RRC) layer, a service data adaptation protocol (service data adaptation protocol, SDAP) layer, a packet data convergence protocol (packet data convergence protocol, PDCP) layer, a radio link control (radio link control, RLC) layer, and a media access control (media access control, MAC) layer.

When coding the second data unit, the upper layer (for example, the application layer) of the terminal device may code the second data unit into at least two flows of data, namely, the third data flow and the fourth data flow. The terminal device determines that both the third data flow and the fourth data flow belong to the second data unit. Therefore, during data packet encapsulation, the second identifier is added to all data packets that belong to the third data flow and all data packets that belong to the fourth data flow. After the encapsulation is completed, QoS control is performed based on a QoS rule (QoS rule). Specifically, all the data packets of the third data flow and all the data packets of the fourth data flow are mapped to corresponding QoS flows, namely, the third QoS data flow and the fourth QoS data flow, and the flows are sent to the access stratum of the terminal device. When receiving the third QoS data flow and the fourth QoS data flow, the access stratum may obtain the second identifier carried in the third QoS data flow and the fourth QoS data flow.

It should be understood that the second identifier is added to both the third QoS data flow and the fourth QoS data flow. Regardless of whether the third QoS data flow first arrives at the access stratum or the fourth QoS data flow first arrives at the access stratum, the access stratum may determine that the third data flow/fourth data flow is a data flow that needs to be synchronized, to perform the method according to this application. This helps improve processing efficiency of the access network device.

It should be further understood that, adding an identifier to a data flow essentially means adding an identifier to a data packet of the data flow during data encapsulation. A meaning thereof is the same in the following unless otherwise specified.

In a possible implementation, the second identifier may also be referred to as a synchronization group identifier (synchronization group identifier). Data packets of data flows that belong to a same data unit are labeled with a same synchronization group identifier.

Optionally, when a media service includes a plurality of data units, the application layer of the terminal device may use different identifiers to distinguish between different data units. For example, an identifier added to a base layer data flow and an enhancement layer data flow of the 1^{st} frame of service #D is ID 0, and an identifier added to a base layer data flow and an enhancement layer data flow of the 2^{nd} frame of service #D is ID 1.

When a plurality of media services are sent, the application layer of the terminal device may distinguish between different services by using different identifier segments. For example, IDs 0 to 4 may respectively represent the 1^{st} frame to the 5^{th} frame of service #E, IDs 5 to 9 may respectively identify the 1^{st} frame to the 5^{th} frame of service #F, for the 6^{th} frame and a frame following the 6^{th} frame of service #E, IDs 0 to 4 may be reused, and for the 6^{th} frame and a frame following the 6^{th} frame of service #F, IDs 5 to 9 may be reused. Specifically, an identifier added to a base layer data flow and an enhancement layer data flow of the 1^{st} frame of service #E is ID 0, an identifier added to a base layer data flow and an enhancement layer data flow of the 2^{nd} frame of media service #E is ID 1, ..., an identifier added to a base layer data flow and an enhancement layer data flow of the 6^{th} frame of service #E is ID 0, an identifier added to a base layer data flow and an enhancement layer data flow of the 7^{th} frame of media service #E is ID 1, ..., an identifier added to a base layer data flow and an enhancement layer data flow of the 1^{st} frame of service #F is ID 5, an identifier added to a base layer data flow and an enhancement layer data flow of the 2^{nd} frame of media service #F is ID 6, ..., an identifier added to a base layer data flow and an enhancement layer data flow of the 6^{th} frame of service #F is ID 5, an identifier added to a base layer data flow and an enhancement layer data flow of the 7^{th} frame of media service #F is ID 6, and so on. The data arrives at the access stratum of the terminal device, the access network device, or the UPF. The access stratum of the terminal device, the access network device, or the UPF may determine, based on the identifiers added by the application layer of the terminal device, that data flows that have a same identifier belong to a same data unit.

It should be understood that, in this case, the second identifier is an identifier added by the application layer of the terminal device.

Optionally, when a plurality of media services are sent, the application layer of the terminal device may add a same identifier only to data flows that belong to a same data unit, without distinguishing between data units of different services. However, when a QoS flow is established, the core network device adds third information to the QoS rule. The third information indicates an available identifier of the QoS flow. QoS flows that belong to a same data unit may be configured with same third information. Therefore, when performing QoS flow mapping, the NAS stratum of the terminal device may update the added identifier based on the third information, to distinguish between different data units. For example, IDs 0 to 9 may respectively represent the 1^{st} frame to the 10^{th} frame of service #E, IDs 0 to 9 respectively identify the 1^{st} frame to the 10^{th} frame of service #F, for the 10^{th} frame and a frame following the 10^{th} frame of service #E, IDs 0 to 9 may be reused, and for the 10^{th} frame and a frame following the 10^{th} frame of service #F, IDs 0 to 9 may also be reused. Specifically, an identifier added to a base layer data flow and an enhancement layer data flow of the 1^{st} frame of service #E is ID 0, an identifier added to a base layer data flow and an enhancement layer data flow of the 2^{nd} frame of media service #E is ID 1, ..., an identifier added to a base layer data flow and an enhancement layer data flow of the 6^{th} frame of service #E is ID 5, an identifier added to a base layer data flow and an enhancement layer data flow of the 7^{th} frame of media service #E is ID 6, ..., an identifier added to a base layer data flow and an enhancement layer data flow of the 1^{st} frame of service #F is ID 0, an identifier added to a base layer data flow and an enhancement layer data flow of the 2^{nd} frame of media service #F is ID 1, ..., an identifier added to a base layer data flow and an enhancement layer data flow of the 6^{th} frame of service #F is ID 5, an identifier added to a base layer data flow and an enhancement layer data flow of the 7^{th} frame of media service #F is ID 6, and so on. For QoS flow 1 and QoS flow 2, third information included in the QoS rule is IDs 0 to 4. For QoS flow 3 and QoS flow 4, third information included in the QoS rule is IDs 5 to 9. In this case, the NAS stratum of the terminal device may determine, based on the QoS rule, that the base layer data flow and the enhancement layer data flow of service #E are mapped to QoS flow 1 and QoS flow 2 respectively, and the base layer data flow and the enhancement layer data flow of service #F are mapped to QoS flow 3 and QoS flow 4 respectively. Therefore, based on the third information, the identifier of the base layer data flow and the enhancement layer data flow of the 6^{th} frame of service #E is updated to ID 0, the identifier of the base layer data flow and the enhancement layer data flow of the 7^{th} frame of media service #E is updated to ID 1, and so on; but the identifiers of the 1^{st} frame to the 5^{th} frame of service #E remain unchanged. The identifier of the base layer data flow and the enhancement layer data flow of the 1^{st} frame of service #F is updated to ID 5, the identifier of the base layer data flow and the enhancement layer data flow of the 2^{nd} frame of media service #F is updated to ID 6, and so on; but the identifiers of the 6^{th} frame to the 10^{th} frame of service #F remain unchanged. The access stratum of the terminal device, the access network device, or the UPF may determine, based on the updated identifiers, that data flows that have a same identifier in QoS flow 1 and QoS flow 2 belong to a same data unit, and data flows that have a same identifier in QoS flow 3 and QoS flow 4 belong to a same data unit.

It should be understood that, in this case, the second identifier is an identifier updated by the NAS stratum of the terminal device. An update of the identifier may be completed in the NAS stratum, including the IP layer, the UDP layer, or the RTP layer.

Optionally, when a plurality of media services are sent, the application layer of the terminal device may add a same identifier only to data flows that belong to a same data unit, without distinguishing between data units of different services. However, when a QoS flow is established, the core network device adds a second association identifier to a QoS profile (QoS profile), the QoS rule, and the PDR. The second association identifier indicates a QoS flow identifier (QoS flow identifier, QFI) associated with the QoS flow. QoS flows associated with each other are separately configured with second association identifiers, so that the same data unit can be identified by using the first association identifiers. For example, a QFI of QoS flow X is X, and a QFI of QoS flow Y is Y. If data in QoS flow X and data in QoS flow Y belong to a same data unit, in the QoS profile, the QoS rule, and the PDR, a second association identifier of QoS flow X is Y, and a second association identifier of QoS flow Y is X. Therefore, when the terminal device performs QoS flow mapping, different data units can be distinguished between based on the second association identifiers. For example, IDs 0 to 9 may respectively represent the 1^{st} frame to the 10^{th} frame of service #E, IDs 0 to 9 respectively identify the 1^{st} frame to the 10^{th} frame of service #F, for the 10^{th} frame and a frame following the 10^{th} frame of service #E, IDs 0 to 9 may be reused, and for the 10^{th} frame and a frame following the 10^{th} frame of service #F, IDs 0 to 9 may also be reused. Specifically, an identifier added to a base layer data flow and an enhancement layer data flow of the 1^{st} frame of service #E is ID 0, an identifier added to a base layer data flow and an enhancement layer data flow of the 2^{nd} frame of media service #E is ID 1, ..., an identifier added to a base layer data flow and an enhancement layer data flow of the 6^{th} frame of service #E is ID 5, an identifier added to a base layer data flow and an enhancement layer data flow of the 7^{th} frame of media service #E is ID 6, ..., an identifier added to a base layer data flow and an enhancement layer data flow of the 1^{st} frame of service #F is ID 0, an identifier added to a base layer data flow and an enhancement layer data flow of the 2^{nd} frame of media service #F is ID 1, ..., an identifier added to a base layer data flow and an enhancement layer data flow of the 6^{th} frame of service #F is ID 5, an identifier added to a base layer data flow and an enhancement layer data flow of the 7^{th} frame of media service #F is ID 6, and so on. A QFI of QoS flow 1 is 1. A QFI of QoS flow 2 is 2. A QFI of QoS flow 3 is 3. A QFI of QoS flow 4 is 4. For QoS flow 1, a second association identifier included in the QoS rule includes QFI = 2. For QoS flow 2, a second association identifier included in the QoS rule includes QFI = 1. For QoS flow 3, a second association identifier included in the QoS rule includes QFI = 4. For QoS flow 4, a second association identifier included in the QoS rule includes QFI = 3. In this case, the NAS stratum of the terminal device determines, based on the QoS rule, to map the base layer data flow and the enhancement layer data flow of service #E to QoS flow 1 and QoS flow 2 respectively, and map the base layer data flow and the enhancement layer data flow of service #F to QoS flow 3 and QoS flow 4 respectively. Therefore, the access stratum of the terminal device may determine, based on the second association identifiers in the QoS rule, that data in QoS flow 1 and data in QoS flow 2 belong to a same data unit, and data in QoS flow 3 and data in QoS flow 4 belong to a same data unit, and determine, based on the identifiers added by the application layer of the terminal device, that data flows that have a same identifier in QoS flow 1 and QoS flow 2 belong to the same data unit, and data flows that have a same identifier in QoS flow 3 and QoS flow 4 belong to a same data unit. Alternatively, the access network device or the UPF may determine, by using the second association identifiers in the QoS profile or the PDR and the identifiers added by the application layer of the terminal device to the data flows, that data flows that have a same identifier belong to a same data unit.

It should be understood that, in this case, the second identifier is a second association identifier and an identifier added by the application layer of the terminal device.

S720: The access stratum of the terminal device, based on the second identifier and a second synchronization time parameter, maps the third QoS data flow and the fourth QoS data flow respectively to a third access network resource and a fourth access network resource and sends the third QoS data flow and the fourth QoS data flow to the access network device. The second synchronization time parameter indicates a maximum interval between a moment at which sending of the third QoS data flow is completed and a moment at which sending of the fourth QoS data flow is completed.

The access stratum of the terminal device determines, based on the second identifier, that the third QoS data flow and the fourth QoS data flow belong to a same data unit, and then maps, based on the second synchronization time parameter, the QoS data flows that belong to the same data unit to corresponding access network resources. The second synchronization time parameter indicates the maximum interval between the moment at which sending of the third QoS data flow is completed and the moment at which sending of the fourth QoS data flow is completed. In other words, a time difference between the third access network resource and the fourth access network resource in time domain is less than time indicated by the second synchronization time parameter. For example, mapping of the QoS flow to the access network resource may be completed at the SDAP layer.

After the mapping is completed, the terminal device sends the third data flow and the fourth data flow in the second data unit to the access network device by using the third access network resource and the fourth access network resource, so that time at which the third data flow in the second data unit and the fourth data flow in the second data unit arrive at the access network device is less than the time indicated by the second synchronization time parameter. Therefore, the access network device can transmit the third data flow and the fourth data flow to a destination device, to help the destination device perform decoding.

The destination device may be another terminal device, or may be the application server.

For example, when the third data flow and the fourth data flow are data of a VR service, the UPF transmits the third data flow and the fourth data flow to the application server, and the application server performs further processing on the third data flow and the fourth data flow and then sends the third data flow and the fourth data flow to the terminal device.

When the third data flow and the fourth data flow are data of a tactility internet service, the UPF directly transmits the third data flow and the fourth data flow to another terminal device through the access network device.

According to the solution in this embodiment of this application, the terminal device may obtain the second identifier, perform access network resource mapping based on the second identifier and the second synchronization time parameter, and send the third QoS data flow and the fourth QoS data flow to the access network device, so that an interval between the moment at which sending of the third QoS data flow in the second data unit to the access network device is completed and the moment at which sending of the fourth QoS data flow in the second data unit to the access network device is completed is less than the time indicated by the second synchronization time parameter, and a time difference between time at which various parts of data in the second data unit arrive at the access network device is reduced. This helps the destination device improve decoding precision, and further improves user experience.

Optionally, the terminal device, based on the second identifier and the second synchronization time parameter, maps the third QoS data flow and the fourth QoS data flow respectively to the third access network resource and the fourth access network resource and sends the third QoS data flow and the fourth QoS data flow to the access network device. In other words, the terminal device determines, based on the second identifier, that the third QoS data flow and the fourth QoS data flow belong to the same data unit, then based on the second synchronization time parameter, maps the third QoS data flow and the fourth QoS data flow respectively to the third access network resource and the fourth access network resource and sends the mapped third data flow and the mapped fourth data flow to the access network device based on the second identifier. The third access network resource is a transmission resource of the third data flow, and the fourth access network resource is a transmission resource of the fourth data flow.

Optionally, that the terminal device, based on the second identifier and a second synchronization time parameter, maps the third QoS data flow and the fourth QoS data flow respectively to a third access network resource and a fourth access network resource and sends the third QoS data flow and the fourth QoS data flow to the access network device includes: The terminal device determines, based on the second identifier, that the third QoS data flow and the fourth QoS data flow belong to the same data unit. The terminal device completes sending of the third QoS data flow at a third moment, and completes sending of the fourth QoS data flow at a fourth moment. An interval between the third moment and the fourth moment is less than the time indicated by the second synchronization time parameter.

Optionally, the third access network resource includes a third data radio bearer, and the fourth access network resource includes a fourth data radio bearer.

The third access network resource and the fourth access network resource may be the same or may be different. This is not limited in this application.

In other words, the third data flow and the fourth data flow may be transmitted by using a same access network resource, or may be transmitted by using different access network resources.

Optionally, it may also be understood that the second identifier indicates that the third QoS data flow and the fourth QoS data flow belong to a same synchronization group, for example, belong to a second synchronization group, that is, need to be synchronized, or have a synchronization requirement. The 1^{st} QoS data flow and the last QoS data flow that belong to the second synchronization group meet the following relationship: An interval between a moment at which the terminal device completes sending of the 1^{st} QoS data flow and a moment at which the terminal device completes sending of the last QoS data flow is less than a second preset value. The second preset value is the same as a value of the time indicated by the second synchronization time parameter.

Optionally, the method 700 further includes S701: The terminal device receives QoS rule information from a session management function network element. The QoS rule information includes the second synchronization time parameter.

The terminal device may establish a QoS flow that has a synchronous association when establishing a PDU session with a core network element. Specifically, the process includes: The SMF sends the QoS rule information to the terminal device, where the QoS rule information includes the second synchronization time parameter.

Optionally, the method 700 further includes S702: The terminal device sends first request information to the session management function network element. The first request information is used to request the second synchronization time parameter from the session management function network element.

UE may notify the SMF of a core network of an uplink synchronization requirement of a service. One possible implementation is to notify the SMF of the core network of the uplink synchronization requirement of the service when a service request (Service request) is sent. Another possible implementation is to notify the SMF of the core network of the uplink synchronization requirement of the service when a PDU session establishment request (PDU session establishment request) is sent. The uplink synchronization requirement specifically includes a size of an uplink data flow, an association relationship between data flows, and the like.

Optionally, the method 700 further includes S703: The access network device establishes a DRB based on the QoS configuration information.

In an example, when establishing the QoS flow, the access network device may receive the QoS configuration information from the SMF. When needing to perform data transmission, the access network device may establish the DRB, and store a binding relationship between the QoS flow and the DRB. Specifically, during storage, the QoS flow is identified by using a QFI.

Optionally, the method 700 further includes: S704: The terminal device obtains DRB configuration information. The DBR configuration information includes a binding relationship between a QoS flow and a DRB. The QoS flow is identified by using the QFI.

In an implementation, the access network device may send the DRB configuration information to the terminal device by using RRC signaling, to facilitate mapping from the QoS flow to the DRB when the terminal device transmits uplink data.

In an implementation, the terminal device may read a downlink QoS mapping rule based on usage of the DRB in a downlink data transmission process, and deduce, based on a reflective QoS mechanism, a DRB corresponding to the QoS flow. In other words, the DRB configuration information is obtained for uplink data transmission of the terminal device.

Optionally, the method 700 further includes S730: The NAS stratum of the terminal device maps, based on the QoS rule, the third data flow and the fourth data flow to QoS flows, namely, the third QoS data flow and the fourth QoS data flow.

Specifically, the NAS stratum of the terminal device performs QoS control based on the QoS rule, including: determining the QoS flows corresponding to the third data flow and the fourth data flow, namely, a third QFI and a fourth QFI, adding the third QFI to a packet header of a data packet of the third data flow, and adding the fourth QFI to a packet header of a data packet of the fourth data flow.

It should be understood that the QoS rule includes a correspondence between the third QFI and the third data flow and a correspondence between the fourth QFI and the fourth data flow. The third QFI identifies a QoS flow to which the third data flow needs to be mapped, and the fourth QFI identifies a QoS flow to which the fourth data flow needs to be mapped.

In an implementation, that the terminal device maps the third QoS data flow and the fourth QoS data flow respectively to a third access network resource and a fourth access network resource based on the second identifier and a second synchronization time parameter includes: The terminal device maps the third QoS data flow to a third DRB based on a binding relationship between the third QFI and the third DRB, and maps the fourth QoS data flow to a fourth DRB based on a binding relationship between the fourth QFI and the fourth DRB. The third QoS data flow includes the third QFI, and the fourth QoS data flow includes the fourth QFI.

In an implementation, that the access stratum of the terminal device, based on the second identifier and a second synchronization time parameter, maps the third QoS data flow and the fourth QoS data flow respectively to a third access network resource and a fourth access network resource and sends the third QoS data flow and the fourth QoS data flow to the access network device includes: The access stratum of the terminal device maps the third QoS data flow to a third DRB based on a binding relationship between the third QFI and the third DRB, and maps the fourth QoS data flow to a fourth DRB based on a binding relationship between the fourth QFI and the fourth DRB. The third QoS data flow includes the third QFI, and the fourth QoS data flow includes the fourth QFI.

Optionally, the method further includes S740: The upper layer of the terminal device sends the third QoS data flow and the fourth QoS data flow to the access stratum.

The upper layer of the terminal device may send the third QoS data flow and the fourth QoS data flow to the access stratum. The second identifier may be carried in the third QoS data flow and the fourth QoS data flow.

In the solution in this embodiment of this application, the time difference between the time at which various parts of data in the second data unit arrive at the access network device can be reduced. This helps the destination device improve the decoding precision, and further improves user experience.

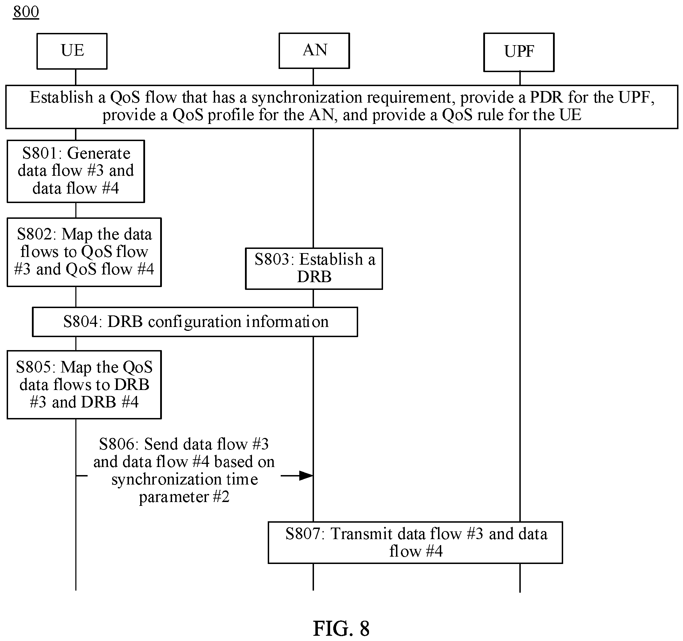

FIG. 8 is another schematic flowchart of a data transmission method according to this application. In FIG. 8, the method is illustrated by using an example in which UE, an AN, a UPF, an AMF, an SMF, a PCF, and the like serve as execution bodies for interaction and illustration, but the execution bodies for interaction and illustration are not limited in this application. For example, the execution bodies may alternatively be chips, chip systems, processors, logical modules or software that support the UE, the AN, the UPF, the AMF, the SMF, and the PCF in implementing the method. It should be understood that the method 800 shown in FIG. 8 may be used as a specific implementation of the foregoing method 700. The UE may be considered as an example of the terminal device in the method 700. The AN may be considered as an example of the access network device in the method 700. The UPF, the AMF, the SMF, and the PCF each may be considered as an example of the core network device in the method 700.

Before data transmission, the UE, the AN, the UPF, the AMF, the SMF, the PCF, and the like may establish a QoS flow that has a synchronization requirement, including the following:

a: The SMF delivers a PDR to the UPF through an N4 interface. The PDR includes synchronization time parameter #2 (an example of the second synchronization time parameter). Optionally, when a second identifier is an identifier updated by the UE, the PDR further includes third information. When the second identifier is association identifier #2 (an example of the second association identifier) and an identifier added by the UE, the PDR further includes association identifier #2.

b: The SMF configures a corresponding QoS profile based on a QoS requirement. The QoS profile includes synchronization time parameter #2. Optionally, when the second identifier is the identifier updated by the UPF, the QoS profile further includes the third information. When the second identifier is association identifier #2 and the identifier added by the UE, the QoS profile further includes association identifier #2. The AMF delivers the QoS profile to the AN through an N2 interface.

c: The SMF delivers the QoS rule to the UE through the N1 interface. The QoS rule includes synchronization time parameter #2 (an example of the second synchronization time parameter). Optionally, when the second identifier is the identifier updated by the UE, the QoS rule further includes the third information. When the second identifier is association identifier #2 (an example of the second association identifier) and the identifier added by the UE, the QoS rule further includes association identifier #2.

When establishment of the QoS flow is completed on a control plane, the established QoS flow may be used for uplink data transmission.

S801: The UE generates data flow #3 and data flow #4. Both data flow #3 and data flow #4 belong to frame #2. Frame #2 is a specific frame of an uplink service.

The UE may code frame #2 to be sent. For example, a scalable coding technology may be used to separately code frame #2 to be coded, as a base layer data flow and an enhancement layer data flow. In this embodiment of this application, an example of one enhancement layer data flow is used for description. The base layer data flow and the enhancement layer data flow of frame #2 are respectively denoted as data flow #3 and data flow #4.

When generating a data flow, in an upper layer of the UE, the UE labels data packets that belong to a same synchronization group with the same identifier. In this application, the data packets that belong to the same frame need to be synchronized. In other words, the data packets in the same synchronization group belong to a same frame. Therefore, identifier #2 may be separately added to data packets of QoS data flow #3 and data flow #4. For example, identifier #2 may be a synchronization group identifier (Synchronization Group Identifier). A function of identifier #2 is to enable an access stratum of the UE and a network side to identify data packets that need to be synchronized. In other words, the access stratum of the UE and the network side are enabled to identify data packets that belong to frame #2.

For example, a protocol layer or a field may be added between an RTP protocol and a UDP protocol, and identifier #2 is carried in the protocol layer or the field.

S802: The UE maps data flow #3 and data flow #4 to QoS flow #3 and QoS flow #4 respectively, namely QoS data flow #3 and QoS data flow #4 based on the QoS rule.

Specifically, the QoS rule includes the synchronization time parameter #2 (an example of the second synchronization time parameter), for example, Multiple Flow Synchronization Transmission. The synchronization time parameter indicates a maximum interval between a moment at which sending of data on a current QoS flow is completed and a moment at which sending of data on another QoS flow is completed. The QoS rule further includes the following information: indication of whether the QoS rule is the default QoS rule (Indication of whether the QoS rule is the default QoS rule), a QoS rule identifier (QoS rule identifier, QRI), the QFI, a priority (priority value). Optionally, the QoS rule may further include a set of packet filters (a set of packet filters). The QFI identifies the current QoS flow.

Optionally, the QoS rule may include the foregoing third information. The third information indicates the available identifier of the QoS flow. The QoS flows that belong to the same data unit may be configured with the same third information. Therefore, when performing the QoS flow mapping, the upper layer (for example, the NAS stratum) of the UE may update, based on the third information, added identifier #2, to distinguish between different data units.

Alternatively, the QoS rule may further include foregoing association identifier #2. Association identifier #2 indicates a QoS flow identifier QFI associated with the QoS flow. Therefore, when performing the QoS flow mapping, the UE may distinguish between different data units based on association identifier #2.

The NAS stratum of the terminal device may match data flow #3 with data flow #4 based on the QoS rule, and may determine QoS parameters of data flow #3 and data flow #4 based on the QFI identifier in the QoS rule, to map the data packets of data flow #3 and data flow #4 to the QoS flows that meet the QoS parameters, for example, to map the data packets of data flow #3 and data flow #4 to QoS flow #3 and QoS flow #4 respectively.

The NAS stratum of the terminal device further adds QFI #3 and QFI #4 to a data packet of data flow #3 and a data packet of data flow #4 respectively. QFI #3 identifies QoS flow #3, and QFI #4 identifies QoS flow #4.

S803: The AN establishes the DRB based on the QoS profile.

When establishing the QoS flow, the AN may establish the DRB based on synchronization time parameter #2 in the QoS profile, and store the binding relationship between the QoS flow and the DRB.

Optionally, the QoS profile may further include at least one of the following parameters: a 5G QoS identifier (5G QoS identifier, 5QI), an allocation and retention priority (ARP), a guaranteed flow bit rate (guaranteed flow bit rate, GFBR), a maximum flow bit rate (maximum flow bit rate, MFBR), notification control, a maximum packet loss rate (maximum packet loss rate, MPLR), a reflection QoS attribute (reflection QoS attribute, RQA), and the like. The SQI is a scalar to be indexed to a corresponding 5G QoS characteristic. The ARP includes a priority level, a preemption capability, and a preemption vulnerability. The GFBR represents a bit rate that is expected to be provided for a GBR QoS flow. The MFBR represents a limited bit rate provided for a GBR QoS flow, namely, a maximum bit rate provided for the GBR QoS flow. If the bit rate is exceeded, a data packet can be discarded. The RQA indicates a service transmitted by using a corresponding QoS flow to uses reflective QoS.

S804: The UE obtains the DRB configuration information.

The UE may receive the DRB configuration information from the AN through the RRC, or may deduce the DRB configuration information by using the usage of the DRB in the downlink data transmission.

S805: The access stratum of the UE receives QoS data flow #3 and QoS data flow #4 from the upper layer, and maps QoS data flow #3 and QoS data flow #4 to DRB #3 and DRB #4 respectively.

The access stratum of the terminal device maps QoS data flow #3 to DRB #3 based on QFI #3 identifier in QoS data flow #3 and an obtained binding relationship between QFI #3 and DRB #3. The access stratum of the terminal device maps QoS data flow #4 to DRB #4 based on QFI #4 identifier in QoS data flow #4 and an obtained binding relationship between QFI #4 and DRB #4.

S806: The UE sends data flow #3 and data flow #4 to the AN through the DRB.

Second, the UE may determine, based on synchronization time parameter #2 in the QoS rule, a maximum delay with which sending of data flow #3 and data flow #4 is completed, and send the data based on the delay.

For example, the terminal device determines, based on identifier #2, that data flow #3 and data flow #4 belong to a same frame, and determines, based on the synchronization time parameter of data flow #3 and data flow #4 in the QoS rule, that the synchronization time is 4 ms. It is assumed that transmission of data flow #3 is completed at the 0^{th} ms. Based on synchronization time parameter #2, the terminal device completes transmission of data flow #4 within 4 ms.

S807. The AN and the UPF continue to send the uplink data, that is, send data flow #3 and data flow #4 to the destination device.

Specifically, when receiving the data packets of data flow #3 and data flow #4, the AN adds a QFI to a packet header of a data packet between the AN and the UPF based on a QFI in a packet header. When the UPF receives the data packet sent by the AN, the UPF may verify, based on the PDR, whether the data packet is transmitted by using a correct QoS flow, and verify whether data flow #3 and data flow #4 meet a synchronization time requirement. When all is verified and correct, the UPF continues the uplink transmission, and sends data flow #3 and data flow #4 to the destination device. The destination device may be another UE, or may be an AS.

In the manner, it can be ensured that a delay with which sending of the data packet of the base layer data flow of frame #2 and the data packet of the enhancement layer data flow of frame #2 is completed is less than a preset value. This helps the destination device perform decoding, and further improves user experience.

It should be noted that, in the method 700 and the method 800, a solution in which the application layer, the NAS stratum, the AS stratum, or the like of the terminal device is used as an execution body is merely an implementation. In actual application, provided that a corresponding function is implemented by a terminal device, a chip or circuit disposed in the terminal device, this application does not limit a specific layer of the terminal device for completion.

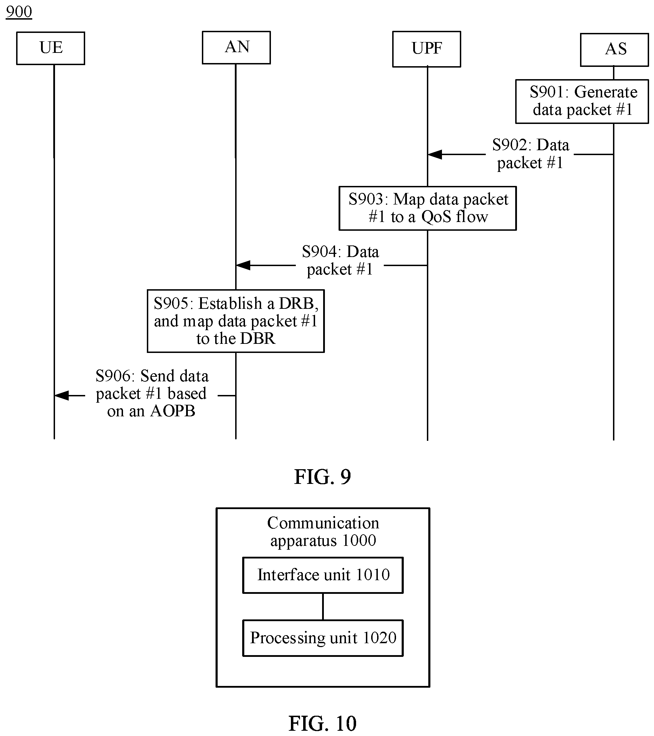

FIG. 9 is another schematic flowchart of a data transmission method according to this application. In FIG. 9, the method is illustrated by using an example in which UE, an AN, a UPF, and an AS serve as execution bodies for interaction and illustration, but the execution bodies for interaction and illustration are not limited in this application. For example, the UE in FIG. 9 may alternatively be a chip, a chip system, or a processor that supports a method that can be implemented by the UE, or may be a logical module or software that can implement all or some functions of the UE. The AN in FIG. 9 may alternatively be a chip, a chip system, or a processor that supports a method that can be implemented by the AN, or may be a logical module or software that can implement all or some functions of the AN. The UPF in FIG. 9 may alternatively be a chip, a chip system, or a processor that supports a method that can be implemented by the UPF, or may be a logical module or software that can implement all or some functions of the UPF. The AS in FIG. 9 may alternatively be a chip, a chip system, or a processor that supports a method that can be implemented by the AS, or may be a logical module or software that can implement all or some functions of the AS. It should be understood that the method 900 shown in FIG. 9 may be used for downlink data transmission.

S901: An application server adds identifier #3 to data packet #1. Identifier #3 indicates generation time of data packet #1.

The generation time may be time at which coding of a video frame is started, or may be time at which coding of a video frame is completed.

The application server may code to-be-sent frame #1. For example, a scalable coding technology may be used to separately code the to-be-coded 1^{st} frame as a base layer data flow and an enhancement layer data flow. In this embodiment of this application, an example of one enhancement layer data flow is used for description. Any data packet in the base layer data flow and the enhancement layer data flow of frame #1 may be denoted as data packet #1.

In an example, the application server separately marks generation time of two data packets that need to be synchronized as 0 ms, and the two data packets that need to be synchronized may be data packets of a base layer and an enhancement layer respectively in a same frame.

S902: The application server sends data packet #1 to the UPF, and the UPF receives data packet #1.

S903: The UPF maps data packet #1 to QoS flow #1 based on a packet detection rule (packet detection rule, PDR).

Specifically, each PDR includes packet detection information (packet detection information, PDI), and the PDI defines a detailed rule for detecting a data packet, including an age of packet budget (Age of Packet Budget, AOPB). The age of packet budget indicates a maximum delay between a moment at which a data packet is generated at a source end and a moment at which the data packet is successfully received at a receiving end. For an IPv4, IPv6, or IPv4v6 PDU session, the PDI further includes the following information: CN tunnel info (CN tunnel info), a network instance (Network instance), the QFI, an IP packet filter set as defined in clause 5.7.6.2 (IP Packet Filter Set as defined in clause 5.7.6.2), and an application identifier (Application Identifier). The application identifier is an index of a group of application detection rules configured in the UPF. For an Ethernet PDU session, the PDI includes the following information: the CN tunnel info (CN tunnel info), the network instance (Network instance), the QFI, and Ethernet packet filter set as defined in clause 5.7.6.3 (Ethernet Packet Filter Set as defined in clause 5.7.6.3).

The UPF may perform matching on data packet #1 based on the PDR, and may determine a QoS parameter of data packet #1 based on the QFI identifier in the PDR, to map data packet #1 to a QoS flow that meets the QoS parameter, for example, map data packet #1 to QoS flow #5.

The UPF further adds QFI #5 to data packet #1, and QFI #5 identifies QoS flow #5.

S904: The UPF sends data packet #1 to the AN.

S905: The AN establishes a DRB based on a QoS profile, and maps data packet #1 to the DRB.

When establishing the QoS flow, the AN may establish the DRB based on synchronization time parameter #1 in the QoS profile, and store a binding relationship between the QoS flow and the DRB.

When receiving data packet #1, the access network device maps data packet #1 to DRB #5 based on QFI #5 identifier in data packet #1 and the stored binding relationship between QFI #5 and DRB #5.

S906: The AN communicates with the UE through the DRB, and schedules data packet #1 based on the AOPB in the QoS profile.

For example, the AN determines, based on identifier #3, that generation time of data packet #1 and data packet #2 is both 0 ms, and determines, based on the AOPB of data packet #1 in the QoS profile, that total scheduled time of data packet #1 is 30 ms. It is assumed that a moment at which data packet #1 arrives at the AN through a core network is the 20^{th} ms. The AN may determine that remaining scheduled time of data packet #1 is 10 ms, and then schedule data packet #1 based on the 10 ms.

In the manner, it can be ensured that sending of any one of the data packet of the base layer data flow of frame #1 and the data packet of the enhancement layer data flow of frame #1 is completed with a delay less than the AOPB. This helps the terminal device perform decoding, and improves user experience.

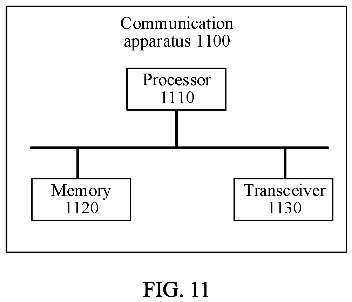

The foregoing describes the data transmission method according to this application with reference to FIG. 4 to FIG. 9. The following describes a communication apparatus according to this application with reference to FIG. 10 and FIG. 11.

FIG. 10 is a schematic block diagram of a communication apparatus according to this application. As shown in FIG. 10, the communication apparatus 1000 may include an interface unit 1010 and/or a processing unit 1020.

The interface unit 1010 may also be referred to as a transceiver unit, including a sending unit and/or a receiving unit. The interface unit 1010 may be a transceiver (including a transmitter and/or a receiver), an input/output interface (including an input interface and/or an output interface), a pin, a circuit, or the like. The interface unit 1010 may be configured to perform the step of sending and/or receiving in the foregoing method embodiments.

The processing unit 1020 may be a processor (where the processing unit may include one or more processors), a processing circuit that has a processor function, or the like, and may be configured to perform a step other than the sending and receiving steps in the foregoing method embodiments.

Optionally, the communication apparatus may further include a storage unit. The storage unit may be a memory, an internal storage unit (for example, a register or a cache), an external storage unit (for example, a read-only memory or a random access memory), or the like. The storage unit is configured to store instructions, and the processing unit 1020 executes the instructions stored in the storage unit, to enable the communication apparatus to perform the foregoing method.

In a design, the communication apparatus 1000 may correspond to the access network device in the foregoing method 500 and method 600, and may perform an operation performed by the access network device or the AN in the method 500 and the method 600.

For example, the interface unit 1010 is configured to receive a first identifier from a core network element. The first identifier indicates that a first quality of service QoS data flow and a second QoS data flow belong to a first data unit. The processing unit 1020 is configured to, based on the first identifier and a first synchronization time parameter, map the first QoS data flow and the second QoS data flow respectively to a first access network resource and a second access network resource and send the first QoS data flow and the second QoS data flow to a terminal device. The first synchronization time parameter indicates a maximum interval between a moment at which sending of the first QoS data flow is completed and a moment at which sending of the second QoS data flow is completed.

It should be understood that the interface unit 1010 and the processing unit 1020 may further perform another operation performed by the access network device and the AN in either of the method 500 and the method 600. Details are not described one by one herein again.

In a design, the communication apparatus 1000 may correspond to the access network device in the foregoing method 900, and may perform an operation performed by the access network device or the AN in the method 900.

In a design, the communication apparatus 1000 may correspond to the terminal device in the method 700 and the method 800, and may perform an operation performed by the terminal device or the UE in the method 700 and the method 800.

For example, the processing unit 1020 is configured to obtain a second identifier. The second identifier indicates that a third QoS data flow and a fourth QoS data flow belong to a second data unit. The interface unit 1010 is configured to, based on the second identifier and a second synchronization time parameter, map the third QoS data flow and the fourth QoS data flow respectively to the third access network resource and the fourth access network resource and send the third QoS data flow and the fourth QoS data flow to an access network device. The second synchronization time parameter indicates a maximum interval between a moment at which sending of the third QoS data flow is completed and a moment at which sending of the fourth QoS data flow is completed.

It should be understood that the interface unit 1010 and the processing unit 1020 may further perform another operation performed by the terminal device or the UE in the foregoing method 700 and method 800. Details are not described one by one herein again.

In a design, the communication apparatus 1000 may correspond to the SMF in any one of the foregoing methods, and may perform an operation performed by the SMF in a corresponding method.

For example, the interface unit 1010 is configured to send a PDR to a UPF, and is used to send a QoS profile to the AN. Optionally, the interface unit is further configured to send a QoS rule to the UE.

It should be understood that the interface unit 1010 and the processing unit 1020 may further perform another operation performed by the SMF in the method 500, the method 600, the method 700 and the method 800. Details are not described one by one herein again.

FIG. 11 is a block diagram of a structure of a communication apparatus 1100 according to an embodiment of this application. The communication apparatus 1100 shown in FIG. 11 includes a processor 1110, a memory 1120, and a transceiver 1130. The processor 1110 is coupled to the memory 1120, and is configured to execute instructions stored in the memory 1120, to control the transceiver 1130 to send a signal and/or receive a signal.

It should be understood that the processor 1110 and the memory 1120 may be integrated into one processing apparatus. The processor 1110 is configured to execute program code stored in the memory 1120 to implement the foregoing functions. During specific implementation, the memory 1120 may alternatively be integrated into the processor 1110, or may be independent of the processor 1110. It should be understood that the processor 1110 may also correspond to each processing unit in the foregoing communication apparatuses, and the transceiver 1130 may correspond to each receiving unit and sending unit in the foregoing communication apparatuses.

It should be further understood that the transceiver 1130 may include a receiver (or referred to as a receiver) and a transmitter (or referred to as a transmitter). The transceiver may further include one or more antennas. The transceiver may alternatively be a communication interface or an interface circuit.

Specifically, the communication apparatus 1100 may correspond to the access network device in the method 500 and the method 600, the access network device in the method 900, or the terminal device in the method 700 and the method 800 according to embodiments of this application. The communication apparatus 1100 may include a unit for performing a method performed by the access network device in the method 500, the method 600, and the method 900, or include a unit for performing a method performed by the terminal device in the method 700 and the method 800. It should be understood that a specific process in which the units perform the foregoing corresponding steps is described in detail in the foregoing method embodiments, and for brevity, details are not described herein.

When the communication apparatus 1100 is a chip, the chip includes an interface unit and a processing unit. The interface unit may be an input/output circuit or a communication interface. The processing unit may be a processor, a microprocessor, or an integrated circuit integrated on the chip.

In an implementation process, steps in the foregoing methods can be completed by using a hardware integrated logical circuit in the processor, or by using instructions in a form of software. The steps of the method disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments may be completed by using a hardware integrated logical circuit in the processor, or by using instructions in a form of software. The processor may be a general purpose-processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

In embodiments of this application, the word "example" or "for example" represents giving an example, an illustration, or a description. Any embodiment or design scheme described as an "example" in this application should not be explained as being more preferred or having more advantages than another embodiment or design scheme. Exactly, the term "example" is used to present a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when" and "if" all mean that UE or a base station performs corresponding processing in an objective situation, but do not constitute any limitation on time, do not require the UE or the base station to perform a determining action during implementation, and do not mean other limitations either.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "at least one of ..." in this specification represents all or any combination of the listed items. For example, "at least one of A, B, and C" may represent the following six cases: Only A exists, only B exists, only C exists, both A and B exist, both B and C exist, and A, B, and C all exist. In this specification, "at least one" means one or more. "A plurality of" means two or more.

It should be understood that in embodiments of this application, "B corresponding to A" represents that B is associated with A, and B may be determined based on A. However, it should be further understood that determining B based on A does not mean that B is determined based only on A. B may alternatively be determined based on A and/or other information. The terms "include", "have", and their variants all mean "include but are not limited to", unless otherwise specifically emphasized in another manner.

It should be understood that, in various embodiments of this application, first, second, and various numbers are merely used for distinguishing for ease of description, and are not used to limit the scope of embodiments of this application. For example, different information is distinguished.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments according to this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
receiving a first identifier from a core network element, wherein the first identifier indicates that a first quality of service QoS data flow and a second QoS data flow belong to a first data unit; and
based on the first identifier and a first synchronization time parameter, mapping the first QoS data flow and the second QoS data flow respectively to a first access network resource and a second access network resource and sending the first QoS data flow and the second QoS data flow to a terminal device, wherein the first synchronization time parameter indicates a maximum interval between a moment at which sending of the first QoS data flow is completed and a moment at which sending of the second QoS data flow is completed.

2. The method according to claim 1, wherein the method further comprises:
receiving QoS configuration information from a session management function network element, wherein the QoS configuration information comprises the first synchronization time parameter.

3. The method according to claim 1 or 2, wherein the first access network resource comprises a first data radio bearer, and the second access network resource comprises a second data radio bearer.

4. The method according to any one of claims 1 to 3, wherein the first identifier is carried in at least one of the following data packets:
a data packet of an internet protocol IP layer, a data packet of a user datagram protocol UDP layer, a data packet of a real-time transport protocol RTP layer, and a data packet of a protocol layer between the UDP layer and the RTP layer.

5. The method according to any one of claims 1 to 4, wherein the core network element is a user plane function network element or the session management function network element.

6. A data transmission method, comprising:
obtaining a second identifier, wherein the second identifier indicates that a third QoS data flow and a fourth QoS data flow belong to a second data unit; and
based on the second identifier and a second synchronization time parameter, mapping the third QoS data flow and the fourth QoS data flow respectively to a third access network resource and a fourth access network resource and sending the third QoS data flow and the fourth QoS data flow to an access network device, wherein the second synchronization time parameter indicates a maximum interval between a moment at which sending of the third QoS data flow is completed and a moment at which sending of the fourth QoS data flow is completed.

7. The method according to claim 6, wherein the method further comprises:
receiving QoS rule information from a session management function network element, wherein the QoS rule information comprises the second synchronization time parameter.

8. The method according to claim 7, wherein the method further comprises:
sending first request information to the session management function network element, wherein the first request information is used to request the second synchronization time parameter from the session management function network element.

9. The method according to any one of claims 6 to 8, wherein the third access network resource comprises a third data radio bearer, and the fourth access network resource comprises a fourth data radio bearer.

10. The method according to any one of claims 6 to 9, wherein the second identifier is carried in at least one of the following data packets:
a data packet of an internet protocol IP layer, a data packet of a user datagram protocol UDP layer, a data packet of a real-time transport protocol RTP layer, and a data packet of a protocol layer between the UDP layer and the RTP layer.

11. A communication apparatus, comprising:
an interface unit, configured to receive a first identifier from a core network element, wherein the first identifier indicates that a first quality of service QoS data flow and a second QoS data flow belong to a first data unit; and
a processing unit, configured to, based on the first identifier and a first synchronization time parameter, map the first QoS data flow and the second QoS data flow respectively to a first access network resource and a second access network resource and send the first QoS data flow and the second QoS data flow to a terminal device, wherein the first synchronization time parameter indicates a maximum interval between a moment at which sending of the first QoS data flow is completed and a moment at which sending of the second QoS data flow is completed.

12. The communication apparatus according to claim 11, wherein the interface unit is further configured to:
receive QoS configuration information from a session management function network element, wherein the QoS configuration information comprises the first synchronization time parameter.

13. The communication apparatus according to claim 11 or 12, wherein the first access network resource comprises a first data radio bearer, and the second access network resource comprises a second data radio bearer.

14. The communication apparatus according to any one of claims 11 to 13, wherein the first identifier is carried in at least one of the following data packets:
a data packet of an internet protocol IP layer, a data packet of a user datagram protocol UDP layer, a data packet of a real-time transport protocol RTP layer, and a data packet of a protocol layer between the UDP layer and the RTP layer.

15. The communication apparatus according to any one of claims 11 to 14, wherein the core network element is a user plane function network element or the session management function network element.

16. A communication apparatus, comprising:
a processing unit, configured to obtain a second identifier, wherein the second identifier indicates that a third QoS data flow and a fourth QoS data flow belong to a second data unit; and
the processing unit is further configured to: based on the second identifier and a second synchronization time parameter, map the third QoS data flow and the fourth QoS data flow respectively to a third access network resource and a fourth access network resource and send the third QoS data flow and the fourth QoS data flow to an access network device, wherein the second synchronization time parameter indicates a maximum interval between a moment at which sending of the third QoS data flow is completed and a moment at which sending of the fourth QoS data flow is completed.

17. The communication apparatus according to claim 16, wherein the apparatus further comprises:
an interface unit, configured to receive QoS rule information from a session management function network element, wherein the QoS rule information comprises the second synchronization time parameter.

18. The communication apparatus according to claim 17, wherein the interface unit is further configured to:
send first request information to the session management function network element, wherein the first request information is used to request the second synchronization time parameter from the session management function network element.

19. The communication apparatus according to any one of claims 16 to 18, wherein the third access network resource comprises a third data radio bearer, and the fourth access network resource comprises a fourth data radio bearer.

20. The communication apparatus according to any one of claims 16 to 19, wherein the second identifier is carried in at least one of the following data packets:
a data packet of an internet protocol IP layer, a data packet of a user datagram protocol UDP layer, a data packet of a real-time transport protocol RTP layer, and a data packet of a protocol layer between the UDP layer and the RTP layer.

21. A communication apparatus, comprising a processor, wherein the processor is coupled to a memory, the memory is configured to store a computer program or instructions, and the processor is configured to execute the computer program or the instructions in the memory, to enable the communication device to perform the method according to any one of claims 1 to 5, or perform the method according to any one of claims 6 to 10.

22. A computer-readable storage medium, wherein the computer-readable storage medium is configured to store a computer program or instructions, and when the computer program or the instructions are run on a computer, the computer is enabled to perform the method according to any one of claims 1 to 5, or the method according to any one of claims 6 to 10.

23. A chip system, comprising a processor, configured to invoke and run a computer program in a memory, wherein a communication device in which the chip system is installed is enabled to perform the method according to any one of claims 1 to 5, or perform the method according to any one of claims 6 to 10.

24. A computer program product, comprising a computer program or instructions, wherein when the computer program or the instructions are executed, the method according to any one of claims 1 to 5 is performed, or the method according to any one of claims 6 to 10 is performed.

25. A communication system, comprising the apparatus according to any one of claims 11 to 15 and the apparatus according to any one of claims 16 to 20.
